(19)

Europäisches
Patentamt
European
Patent Office
Office européen
des brevets

(11) **EP 4 596 075 A1**

(12) **EUROPEAN PATENT APPLICATION**
published in accordance with Art. 153(4) EPC

(43) Date of publication:
**06.08.2025 Bulletin 2025/32**

(21) Application number: **23872393.6**

(22) Date of filing: **27.09.2023**

(51) International Patent Classification (IPC):
**A63H 11/00** (2006.01)    **B25J 13/08** (2006.01)

(52) Cooperative Patent Classification (CPC):
**A63H 11/00; B25J 13/08**

(86) International application number:
**PCT/JP2023/035074**

(87) International publication number:
**WO 2024/071171 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 JP 2022156765**

(71) Applicant: **Nitto Denko Corporation
Ibaraki-shi, Osaka 567-8680 (JP)**

(72) Inventors:
• **YAMAUCHI, Kengo
Ibaraki-shi, Osaka 567-8680 (JP)**
• **FUKUSHIMA, Rihito
Ibaraki-shi, Osaka 567-8680 (JP)**
• **KIYOSHIMA, Keita
Ibaraki-shi, Osaka 567-8680 (JP)**
• **SHIMIZU, Yusuke
Ibaraki-shi, Osaka 567-8680 (JP)**

(74) Representative: **Epping - Hermann - Fischer
Patentanwaltsgesellschaft mbH
Schloßschmidstraße 5
80639 München (DE)**

(54) **ROBOT, LEARNING DEVICE, CONTROL METHOD, AND PROGRAM**

(57)    Actions that do not match an interaction style of a user are reduced. A robot includes an acquisition unit configured to acquire information on contact of a user with respect to the robot; and an action control unit configured to instruct to perform a predetermined action that induces a favorable reaction of the user in accordance with a state of an interaction style of the user based on the information on the contact.

FIG.1

## Description

TECHNICAL FIELD

The present disclosure relates to a robot, a learning device, a control method, and a program.

BACKGROUND

Conventionally, a robot designed for interaction with a user is known. Additionally, a robot configured to provide comfort by interacting with a user is known.

Patent Document 1 discloses detecting contact of a user with respect to a surface of a robot's body, determining whether it is a comfortable action in accordance with a contact part and a contact force, and changing an action of the robot in accordance with the determination result.

Related Art Document

Patent Document

[Patent Document 1] Japanese Laid-open Patent Application Publication No. 2019-72495

SUMMARY OF THE INVENTION

Problem to be solved by the invention

However, in Patent Document 1, the action of the robot is changed in accordance with whether the contact of the user is a comfortable action for the robot, and thus it is difficult to perform an action that matches an interaction style desired by the user. If the robot performs an action that does not match the interaction style of the user, the communication becomes unnatural for the user. Consequently, the user cannot interact with the robot in the long term, and comfort cannot be provided.

The disclosed technique aims to reduce actions that do not match the interaction style of the user.

Means for Solving the Problem

An aspect of the present disclosure is a robot including an acquisition unit configured to acquire information on contact of a user with respect to the robot; and an action control unit configured to instruct to perform a predetermined action that induces a favorable response of the user in accordance with a state of an interaction style of the user, based on the information on the contact.

Another aspect of the present disclosure is a learning device communicatively connected to a robot. The learning device includes a state observation unit configured to observe, based on information on contact of a user with respect to the robot, a state of an interaction style of the user; and a learning unit configured to generate, by machine learning, a learning model configured to receive the state of the interaction style of the user and output a value of an action of the robot.

Effect of the invention

According to the aspect of the present disclosure, actions that do not match an interaction style of the user can be reduced.

BRIEF DESCRIPTION OF THE DRAWINGS

[FIG. 1] FIG. 1 is a perspective view of a robot according to an embodiment.
[FIG. 2] FIG. 2 is a side view of the robot according to the embodiment.
[FIG. 3] FIG. 3 is a cross-sectional view of the robot of the embodiment along a cutting line III-III.
[FIG. 4] FIG. 4 is a diagram illustrating a configuration of a vital sensor according to the embodiment.
[FIG. 5] FIG. 5 is a block diagram illustrating a hardware configuration of a controller according to the embodiment.
[FIG. 6] FIG. 6 is a block diagram illustrating a functional configuration of the controller according to the embodiment.
[FIG. 7] FIG. 7 is a block diagram illustrating a hardware configuration of an estimation unit (a learning device) according to the embodiment.
[FIG. 8] FIG. 8 is a block diagram illustrating a functional configuration of the estimation unit (the learning device) according to the embodiment.
[FIG. 9] FIG. 9 is a schematic diagram of a learning model of a neuron according to the embodiment.
[FIG. 10] FIG. 10 is a schematic diagram of a learning model of a neural network according to the embodiment.
[FIG. 11] FIG. 11 is a flowchart illustrating a process of the controller according to the embodiment.
[FIG. 12] FIG. 12 is a flowchart illustrating a process of the estimation unit (the learning device) of the embodiment.
[FIG. 13] FIG. 13 is a block diagram illustrating a functional configuration of an estimation unit (a learning device) of a modification example.
[FIG. 14] FIG. 14 is a flowchart illustrating a process of the estimation unit (the learning device) of the modification example.

DESCRIPTION OF THE EMBODIMENTS

In the following, embodiments of the present disclosure will be described in detail with reference to the drawings. In the drawings, the same components are denoted by the same reference symbols, and duplicated description will be appropriately omitted.

The embodiments described below are examples of a robot for embodying the technical idea of the present disclosure, and the present disclosure is not limited to the embodiments described below. The dimensions, materials, shapes, relative arrangements, and the like of the components described below are intended to illustrate the examples, not to limit the scope of the present disclosure thereto, unless otherwise specified. Additionally, the size, positional relationship, and the like of members illustrated in the drawings may be exaggerated for clarity of description.

<Overall Configuration Example of Robot 100>

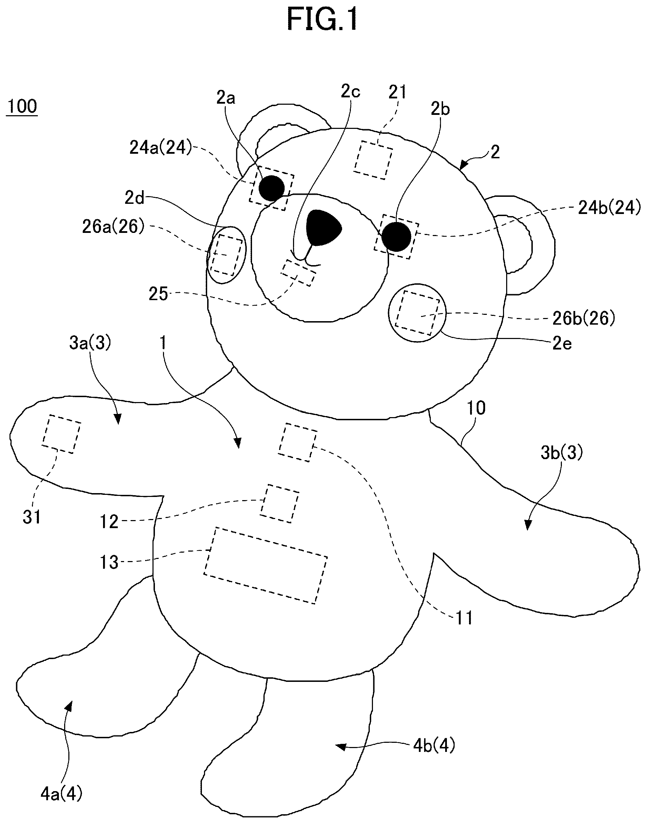

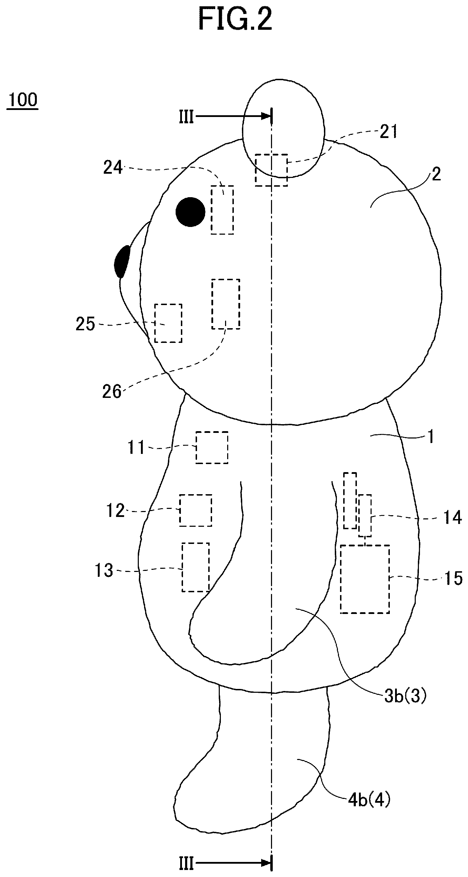

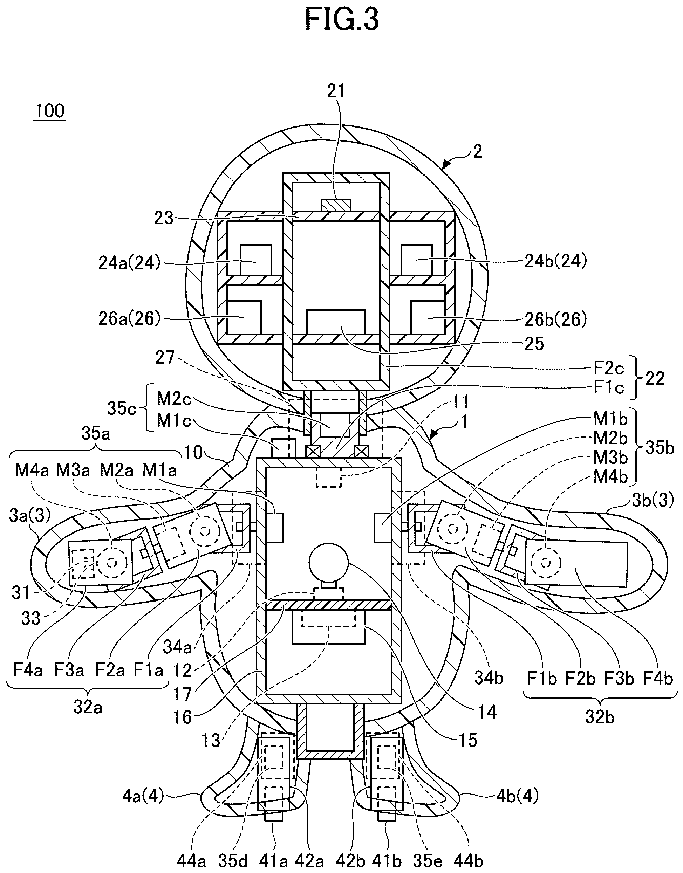

A configuration of a robot 100 according to an embodiment will be described with reference to FIGS. 1 to 3. FIG. 1 is a perspective view illustrating the robot 100 according to the embodiment. FIG. 2 is a side view of the robot 100. FIG. 3 is a cross-sectional view along a cutting line III-III in FIG. 2.

The robot 100 is a robot that includes exterior members 10 and that is configured to be driven by supplied power. The robot 100 described in the present embodiment as an example is a doll-type communication robot in the shape of a bear cub. The robot 100 is manufactured to have a size and weight suitable for being held by a user. Here, the user indicates a user of the robot 100. Typical examples of the user include a working adult living alone, a senior person whose child has moved out, and a frail elderly person who is a target of home healthcare. Additionally, the user may include a contact person who simply contacts the robot 100, such as an administrator of the robot 100, in addition to the user of the robot 100.

The exterior member 10 has flexibility. The exterior member 10 contains, for example, a soft material that is comfortable to touch when the user of the robot 100 touches the robot 100. As the material of the exterior member 10, a material containing an organic material, such as urethane foam, rubber, resin, or fiber can be used. The exterior member 10 preferably includes an exterior, such as a urethane foam material, having a heat insulating property, and a soft cloth material covering the outer surface of the exterior.

The robot 100 includes, for example, a trunk 1, a head 2, arms 3, and legs 4. The head 2 has a right eye 2a, a left eye 2b, a mouth 2c, a right cheek 2d, and a left cheek 2e. The arms 3 include a right arm 3a and a left arm 3b, and the legs 4 include a right leg 4a and a left leg 4b. Here, the trunk 1 corresponds to a robot main body. Each of the head 2, the arm 3, and the leg 4 corresponds to a driving body that is connected to the robot main body so as to be relatively displaceable.

In the present embodiment, the arm 3 is configured to be displaceable with respect to the trunk 1. For example, when the robot 100 is held by the user, the robot 100 displaces the right arm 3a and the left arm 3b to contact a neck, a trunk, or the like of the user so as to hold the user. This operation allows the user to feel an affinity for the robot 100, and thus promotes the interaction between the user and the robot 100. Here, the interaction with the user indicates an action of the user and the robot 100 touching each other (a contact action), such as rubbing, tapping (touching), hugging (embracing), and the like.

The trunk 1, the head 2, the arms 3, and the legs 4 are all covered with the exterior members 10. The exterior member at the trunk 1 and the exterior member at the arm 3 are integrated, and the exterior members at the head 2 and the leg 4 are separated from the exterior member at the trunk 1 and the arm 3. However, the embodiments are not limited to these configurations, and for example, only a portion of the robot 100 that is likely to be contacted by the user may be covered by the exterior member 10. Additionally, at least one of the exterior members 10 at the trunk 1, the head 2, the arm 3, and the leg 4 may be separated from the other exterior members. Further, a portion in the head 2, the arm 3, and the leg 4 that does not displace may be configured only by the exterior member 10 without including a component such as a sensor therein.

The robot 100 includes a camera 11, a tactile sensor 12, a controller 13, a vital sensor 14, a battery 15, a first capacitive sensor 21, and a second capacitive sensor 31 inside the exterior members 10. Additionally, the robot 100 includes the camera 11, the tactile sensor 12, the controller 13, the vital sensor 14, and the battery 15 inside the exterior member 10 at the trunk 1. Additionally, the robot 100 includes the first capacitive sensor 21 inside the exterior member 10 at the head 2, and the second capacitive sensor 31 inside the exterior member 10 at the arm 3.

Additionally, the robot 100 includes displays 24, a speaker 25, and lights 26 inside the exterior member 10 at the head 2. Additionally, the robot 100 includes the displays 24 inside the exterior member 10 at the right eye 2a and the left eye 2b. Additionally, the robot 100 includes the speaker 25 inside the exterior member 10 at the mouth 2c, and the lights 26 inside the exterior member 10 at the right cheek 2d and the left cheek 2e.

More specifically, as illustrated in FIG. 3, the robot 100 includes a trunk frame 16 and a trunk mounting base 17 inside the exterior member 10 at the trunk 1. Additionally, the robot 100 includes a head frame 22 and a head mounting base 23 inside the exterior member 10 at the head 2. Further, the robot 100 includes a right arm frame 32a and a right arm mounting base 33 inside the exterior member 10 at the right arm 3a, and a left arm frame 32b inside the exterior member 10 at the left arm 3b. In addition, the robot 100 includes a right leg frame 42a inside the exterior member 10 at the right leg 4a, and a left leg frame 42b inside the exterior member 10 at the left leg 4b.

The trunk frame 16, the head frame 22, the right arm frame 32a, the left arm frame 32b, the right leg frame 42a, and the left leg frame 42b are structures each formed by combining multiple columnar members. The trunk mounting base 17, the head mounting base 23, and the right arm mounting base 33 are plate members having placement surfaces. The trunk mounting base 17 is fixed to the trunk frame 16, the head mounting base 23 is fixed to the head frame 22, and the right arm mounting base 33 is fixed to the right arm frame 32a. Here, the trunk frame 16, the head frame 22, the right arm frame 32a, the left arm frame 32b, the right leg frame 42a, and the left leg frame 42b may be formed in a box shape including multiple plate members.

The right arm frame 32a is connected to the trunk frame 16 via a right arm connection mechanism 34a, and is driven by a right arm servo motor 35a, thereby being relatively displaceable with respect to the trunk frame 16. The displacement of the right arm frame 32a causes the right arm 3a to displace relative to the trunk 1. The right arm connection mechanism 34a preferably includes a reduction gear that increases the output torque of the right arm servo motor 35a, for example.

In the present embodiment, the right arm frame 32a is configured by a multi-joint robot arm including multiple frame members and multiple connection mechanisms. For example, the right arm frame 32a includes a right shoulder frame F1a, a right upper arm frame F2a, a right elbow frame F3a, and a right forearm frame F4a. The trunk frame 16, the right shoulder frame F1a, the right upper arm frame F2a, the right elbow frame F3a, and the right forearm frame F4a are connected to each other via respective connection mechanisms.

The right arm servo motor 35a is a generic term of multiple servo motors. For example, the right arm servo motor 35a includes a right shoulder servo motor M1a, a right upper arm servo motor M2a, a right elbow servo motor M3a, and a right forearm servo motor M4a. The right shoulder servo motor M1a rotates the right shoulder frame F1a about a rotation axis perpendicular to the trunk frame 16. The right upper arm servo motor M2a rotates the right upper arm frame F2a about a rotation axis perpendicular to a rotation axis of the right shoulder frame F1a. The right elbow servo motor M3a rotates the right elbow frame F3a about a rotation axis perpendicular to a rotation axis of the right upper arm frame F2a. The right forearm servo motor M4a rotates the right forearm frame F4a about a rotation axis perpendicular to a rotation axis of the right elbow frame F3a.

The left arm frame 32b is connected to the trunk frame 16 via a left arm connection mechanism 34b, and is driven by a left arm servo motor 35b, thereby being relatively displaceable with respect to the trunk frame 16. The displacement of the left arm frame 32b causes the left arm 3b to displace relative to the trunk 1. The left arm connection mechanism 34b preferably includes a reduction gear that increases the output torque of the left arm servo motor 35b, for example.

In the present embodiment, the left arm frame 32b is configured by a multi-joint robot arm including multiple frame members and multiple connection mechanisms. For example, the left arm frame 32b includes a left shoulder frame F1b, a left upper arm frame F2b, a left elbow frame F3b, and a left forearm frame F4b. The trunk frame 16, the left shoulder frame F1b, the left upper arm frame F2b, the left elbow frame F3b, and the left forearm frame F4b are connected to each other via respective connection mechanisms.

The left arm servo motor 35b is a generic term of multiple servo motors. For example, the left arm servo motor 35b includes a left shoulder servo motor M1b, a left upper arm servo motor M2b, a left elbow servo motor M3b, and a left forearm servo motor M4b. The left shoulder servo motor M1b rotates the left shoulder frame F1b about a rotation axis perpendicular to the trunk frame 16. The left upper arm servo motor M2b rotates the left upper arm frame F2b about a rotation axis perpendicular to a rotation axis of the left shoulder frame F1b. The left elbow servo motor M3b rotates the left elbow frame F3b about a rotation axis perpendicular to a rotation axis of the left upper arm frame F2b. The left forearm servo motor M4b rotates the left forearm frame F4b about a rotation axis perpendicular to a rotation axis of the left elbow frame F3b.

The arm 3 includes the four-axis joints as described above, thereby enabling the robot 100 to realize a more realistic operation. For example, the robot 100 can perform an action that matches an interaction image of the user by moving the arm 3 to gently "hug" a user who has gently hugged (embraced) the robot 100 for a relatively long time. Additionally, the robot 100 can perform an action that matches a situation of a busy user by moving the arm 3 to, for a short time, "rub" the user who has rubbed the robot 100 for a relatively short time.

The head frame 22 is connected to the trunk frame 16 via a head connection mechanism 27, and is driven by a head servo motor 35c, thereby being relatively displaceable with respect to the trunk frame 16. The displacement of the head frame 22 causes the head 2 to displace relative to the trunk 1. The head connection mechanism 27 preferably includes a reduction gear that increases the output torque of the head servo motor 35c, for example.

In the present embodiment, the head frame 22 includes a neck frame F1c and a face frame F2c. The trunk frame 16, the neck frame F1c, and the face frame F2c are connected to each other via respective connection mechanisms.

The head servo motor 35c is a generic term of multiple servo motors. For example, the head servo motor 35c includes a neck servo motor M1c and a face servo motor M2c. The neck servo motor M1c rotates the neck frame F1c about a rotation axis perpendicular to the trunk frame 16. The face servo motor M2c rotates the face frame F2c around a rotation axis perpendicular to a rotation axis of the neck frame F1c.

The head 2 includes the two-axis joints as described above, thereby enabling the robot 100 to realize a more realistic operation. For example, the robot 100 can perform an action that matches the interaction style of the user by moving the head 2 to "look up" (pay attention to) the user who has held the robot 100 for a relatively short time.

The right leg frame 42a is connected to the trunk frame 16 via a right leg connection mechanism 44a, and includes a right leg wheel 41a on the bottom side. In order to stabilize the posture of the robot 100, the robot 100 preferably includes two right leg wheels 41a in the front-rear direction of the right leg frame 42a. The right leg wheel 41a is driven by a right leg servo motor 35d, thereby being rotatable about a rotation axis perpendicular to the front-rear direction of the right leg frame 42a. The rotation of the right leg wheel 41a enables the robot 100 to travel. The right leg connection mechanism 44a preferably includes a reduction gear that increases the output torque of the right leg servo motor 35d, for example.

The left leg frame 42b is connected to the trunk frame 16 via a left leg connection mechanism 44b, and includes a left leg wheel 41b on the bottom side. In order to stabilize the posture of the robot 100, the robot 100 preferably includes two left leg wheels 41b in the front-rear direction of the left leg frame 42b. The left leg wheel 41b is driven by the left leg servo motor 35e, thereby being rotatable about a rotation axis perpendicular to the front-rear direction of the left leg frame 42b. The rotation of the left leg wheel 41b enables the robot 100 to travel. The left leg connection mechanism 44b preferably includes a reduction gear that increases the output torque of a left leg servo motor 35e, for example.

In the present embodiment, the robot 100 moves forward or backward by simultaneously rotating the right leg wheel 41a and the left leg wheel 41b forward or backward. The robot 100 turns right or left by braking one of the right leg wheel 41a or the left leg wheel 41b with a brake and turning the other forward or backward.

As described, the robot 100 can realize a more realistic operation by the leg 4. For example, the robot 100 can perform an action that matches the interaction image of the user by moving the leg 4 to "entrust the body" to the user who has stroked the robot 100 for a relatively long time.

The camera 11 is fixed to the trunk frame 16. The tactile sensor 12, the controller 13, the vital sensor 14, and the battery 15 are fixed to the trunk mounting base 17. The controller 13 and the battery 15 are fixed to the side of the trunk mounting base 17 opposite to the side to which the tactile sensor 12 and the vital sensor 14 are fixed. Here, the arrangement of the controller 13 and the battery 15 is due to the space available on the trunk mounting base 17 and is not limited to the above described arrangement. However, if the battery 15 is fixed to the side of the trunk mounting base 17 opposite to the side to which the tactile sensor 12 and the vital sensor 14 are fixed, the center of gravity of the robot 100 is lowered because the battery 15 is heavier than other components. The center of gravity of the robot 100 is preferably low because at least one of the position or the posture of the robot 100 is stabilized and at least one of charging or replacement of the battery 15 is easily performed.

The first capacitive sensor 21 is fixed to the head mounting base 23, and the second capacitive sensor 31 is fixed to the right arm mounting base 33. The display 24 includes a right-eye display 24a and a left-eye display 24b. The right-eye display 24a, the left-eye display 24b, and the speaker 25 are fixed to the head frame 22. The lights 26 include a right-cheek light 26a and a left-cheek light 26b. The right-cheek light 26a and the left-cheek light 26b are fixed to the head frame 22.

Here, the camera 11, the tactile sensor 12, the controller 13, the vital sensor 14, the battery 15, the first capacitive sensor 21, the second capacitive sensor 31, and the like can be fixed by a screw member, an adhesive member, or the like. Additionally, the right-eye display 24a, the left-eye display 24b, the speaker 25, the right-cheek light 26a, the left-cheek light 26b, and the like can also be fixed by screw members, adhesive members, or the like.

The materials of the trunk frame 16, the trunk mounting base 17, the head frame 22, the head mounting base 23, the right arm frame 32a, the right arm mounting base 33, and the left arm frame 32b are not particularly limited, and a resin material, a metallic material, or the like can be used. However, from the viewpoint of ensuring strength during driving, it is preferable to use a metallic material, such as aluminum, for the trunk frame 16, the right arm frame 32a, and the left arm frame 32b. If the strength can be obtained, it is preferable to use a resin material for the material of each of these parts in order to reduce the weight of the robot 100. The materials of the trunk mounting base 17, the head frame 22, the head mounting base 23, the right arm mounting base 33, and the left arm frame 32b are not particularly limited, and a resin material or a metallic material can be used. However, from the viewpoint of reducing the weight of the robot 100, it is preferable to use a resin material.

The controller 13 is communicably connected to each of the camera 11, the tactile sensor 12, the vital sensor 14, the first capacitive sensor 21, the second capacitive sensor 31, the right arm servo motor 35a, and the left arm servo motor 35b by wire or wirelessly. Additionally, the controller 13 is communicably connected to each of the head servo motor 35c, the right leg servo motor 35d, and the left leg servo motor 35e by wire or wirelessly. Further, the controller 13 is communicably connected to each of the right-eye display 24a, the left-eye display 24b, the speaker 25, the right-cheek light 26a, and the left-cheek light 26b by wire or wirelessly.

The camera 11 is an image sensor configured to output a captured image of the surroundings of the robot 100 to the controller 13. In the present embodiment, the camera 11 is an example of an imaging section configured to image a user. The camera 11 includes a lens and an imaging element that captures an image formed by the lens. As the imaging element, a charge coupled device (CCD), a complementary metal-oxide semiconductor (CMOS), or the like can be used. The captured image may be either a still image or a moving image.

Additionally, the camera 11 is preferably configured by a time-of-flight (TOF) camera configured to output a distance image of the surroundings of the robot 100 to the controller 13. Therefore, the captured image output from the camera 11 may include a three-dimensional captured image (the distance image) in addition to the two-dimensional captured image or instead of the two-dimensional captured image. The captured image is used for detection of the presence or approach of the user, detection of the distance from the robot 100 to the user, authentication of the user, estimation of emotion of the user, or the like. The captured image is an example of a face image of the user. Additionally, the robot 100 may include, in addition to the camera 11, a human presence sensor, such as an ultrasonic sensor, an infrared sensor, a millimeter wave radar, or a light detection and raging (LiDAR).

The tactile sensor 12 is a sensor element configured to detect information felt by a tactile sense inherent in a human hand or the like, convert the information into a tactile signal, which is an electrical signal, and output the tactile signal to the controller 13. The tactile sensor 12 is preferably configured not to disturb the user's tactile feeling in terms of improving the tactile feeling of the robot 100. For example, the tactile sensor 12 is preferably configured to have flexibility and is configured to be deformable to follow a shape change of the exterior member 10 of the robot 100. For example, the tactile sensor 12 converts information on pressure or vibration generated by the user contacting the robot 100 into a tactile signal by a piezoelectric element, and outputs the tactile signal to the controller 13. The tactile signal output from the tactile sensor 12 is an example of information on the contact of the user with respect to the robot 100.

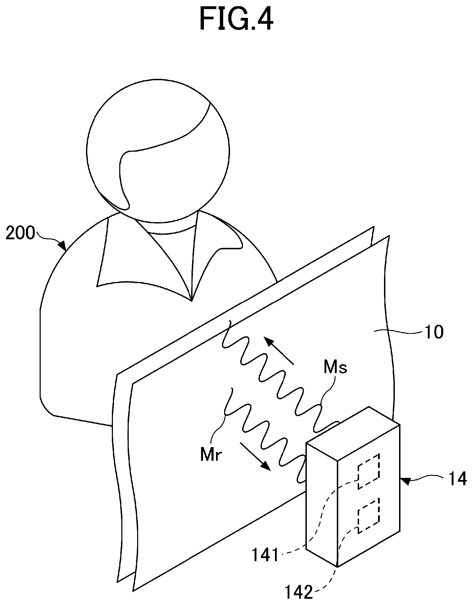

The vital sensor 14 is an example of an electromagnetic wave sensor configured to acquire biological information of the user by using electromagnetic waves. The vital sensor 14 will be described in detail later with reference to FIG. 4.

The first capacitive sensor 21 and the second capacitive sensor 31 are sensor elements configured to output, to the controller 13, a capacitance signal obtained by detecting, based on a change in capacitance, that the user has come into contact with or come in proximity to the robot 100. The first capacitive sensor 21 and the second capacitive sensor 31 are preferably configured not to disturb the user's tactile feeling in terms of improving the tactile feeling of the robot 100. For example, the first capacitive sensor 21 and the second capacitive sensor 31 are configured as flexible sensors including a conductive thread or the like fixed to the exterior member 10 in a mesh shape. Here, the capacitance signals output from the first capacitive sensor 21 and the second capacitive sensor 31 are examples of information on the contact of the user with respect to the robot 100.

Here, the "information on the contact of the user" includes information on at least one of the contact site, the contact range, the contact time, or contact force detected from the information of the sensor configured to detect the contact of the user, such as the tactile signal or the capacitance signal. The information on the contact site, the contact range, the contact time, and the contact force is defined as follows.

The information on the "contact part" is, for example, information on a body part of the robot 100 touched by the user in one user interaction. For example, when the user strokes the head 2 of the robot 100, the "contact part" is the head 2, and when the user hugs the robot 100, the "contact part" is the trunk 1 and the arm 3. Additionally, the "contact part" may change over time in one user interaction, but in this case, the body part of the robot 100 having the largest number of contact parts may be used. Here, "one user interaction" is a duration of contact from the time when the user touches the robot 100 until the user leaves the robot for a predetermined time (for example, one second). For example, when the user touches the robot 100 twice in succession, if the interval between the first touch and the second touch is not greater than or equal to a predetermined time (for example, one second or greater), it is one interaction.

Additionally, preferably, the information on the "contact part" is not a large-scale classification, such as the trunk 1, the head 2, the arm 3, or the leg 4, but is a mid-scale or small-scale classification. For example, the "contact part" is a mid-scale or small-scale classification of the trunk 1, such as a chest, an abdomen, a back, and a waist, and a mid-scale or small-scale classification of the head 2, such as an eye, a nose, a mouth, a jaw, a cheek, a forehead, top of the head, a temple, and back of the head. Additionally, for example, the "contact part" is a mid-scale or small-scale classification of the arm 3, such as a shoulder, an upper arm, a forearm, and a hand of the right arm 3a or the left arm 3b, and a mid-scale or small-scale classification of the leg 4, such as a thigh, a knee, a lower leg, and a foot of the right leg 4a or the left leg 4b.

Therefore, it is preferable that the tactile sensor 12, the first capacitive sensor 21, and the second capacitive sensor 31 can detect the body part of the large-scale, mid-scale, or small-scale classification.

The information on the "contact range" is, for example, information on at least one of a surface region or a surface area of the robot 100 touched by the user in one user interaction. For example, when the user hugs the robot 100, the "contact range" is a surface region including connection information of the body parts of the robot 100 touched by the user, such as the chest (the trunk 1) -> the right upper arm and left upper arm (the arm 3) -> the back (the trunk 1). Additionally, when the user hugs the robot 100, the "contact range" is the total of the surface areas of the robot 100 touched by the user with respect to the chest (the trunk 1), the right upper arm (the arm 3), the left upper arm (the arm 3), and back (the trunk 1). Additionally, the "contact range" may change over time in one user interaction, but in this case, a contact range of the robot 100 that is the largest in one user interaction may be used.

The information on the "contact time" is, for example, information on the duration of one user interaction. The "contact time" is not the duration in which the user continuously touches one body part of the robot 100, but, for example, when the user immediately hugs the robot 100 after rubbing the arm 3, is the duration from the user rubbing the robot 100 to the end of the hug. Additionally, the information on the "contact time" may include at least one of the contact speed of the user or the contact acceleration of the user with respect to the robot 100 (Hereinafter, referred to as a "contact change rate" of the user). Furthermore, the information on the "contact time" may include the frequency of the interaction style of the user, such as the number of times the user hugs or the number of times the user strokes the robot.

The information on the "contact force" is, for example, information on the force applied by the user to the surface of the robot 100 in one user interaction. For example, when the user hugs the robot 100, the "contact force" is the maximum value or the average value of the forces applied by the user to the chest (the trunk 1), the right upper arm (the arm 3), the left upper arm (the arm 3), and the back (the trunk 1). Additionally, the "contact force" may change over time in one user interaction, but in this case, may be the maximum value or the average value of the forces applied by the user in one user interaction.

The right-eye display 24a and the left-eye display 24b are display modules configured to display character strings, such as characters, numerals, and symbols, or images in response to a command from the controller 13. The right-eye display 24a and the left-eye display 24b are configured by, for example, liquid crystal display modules. The character strings or images displayed on the right-eye display 24a and the left-eye display 24b are used to express the emotion of the robot 100. For example, the robot 100 can perform the action that matches the interaction style of the user by displaying, on the right-eye display 24a and the left-eye display 24b, an image of "changing the expression " (opening and closing the eyes) to the user who has held the robot tightly for a relatively short time.

The speaker 25 is a speaker unit configured to amplify an audio signal from the controller 13 and emit sound. The sound emitted from the speaker 25 is a word or a call of the robot 100, and is used to express the emotion of the robot 100. For example, the robot 100 can perform the action that matches the interaction style of the user by "outputting a voice" (calling) to the user who has performed a one-touch action, from the speaker 25.

The right-cheek light 26a and the left-cheek light 26b are light modules configured to blink or change colors in response to an on/off signal from the controller 13. The right-cheek light 26a and the left-cheek light 26b are configured by, for example, light emitting diodes (LEDs). The blinking or the changing of the colors of the right-cheek light 26a and the left-cheek light 26b is used to express the emotion of the robot 100. For example, the robot 100 can perform an action that matches the interaction style of the user by causing the right-cheek light 26a and the left-cheek light 26b to blink in red to the user who has held the robot 100.

The battery 15 is a power supply configured to supply power to each of the camera 11, the tactile sensor 12, the controller 13, the vital sensor 14, the first capacitive sensor 21, the second capacitive sensor 31, the right arm servo motor 35a, and the left arm servo motor 35b. Additionally, the battery 15 supplies power to each of the head servo motor 35c, the right leg servo motor 35d, and the left leg servo motor 35e. Further, the battery 15 supplies power to each of the right-eye display 24a, the left-eye display 24b, the speaker 25, the right-cheek light 26a, and the left-cheek light 26b. Various secondary batteries, such as a lithium ion battery and a lithium polymer battery can be used as the battery 15.

Here, the installation positions of the tactile sensor 12, the first capacitive sensor 21, the second capacitive sensor 31, the camera 11, and the vital sensor 14 in the robot 100 can be changed as appropriate. Further, the various sensors, such as the camera 11 and the vital sensor 14 may be disposed outside the robot 100 and transmit necessary information to the robot 100 or an external device via wireless connection. For example, a learning device configured by a personal computer (PC) or a server is an example of the external device.

Additionally, the robot 100 does not necessarily include the controller 13 inside the exterior member 10, and the controller 13 can communicate with each device from the outside of the exterior member 10 via wireless connection. The battery 15 can supply power to each component from the outside of the exterior member 10.

In the present embodiment, a configuration in which the head 2, the arm 3, and the leg 4 are displaceable is described as an example, but the present embodiment is not limited thereto, and at least one of the head 2, the arm 3, or the leg 4 may be displaceable. Additionally, the arm 3 is configured by a four-axis multi-joint robot arm, but may be configured by a six-axis multi-joint robot arm. Further, the arm 3 is preferably connectable to an end effector, such as a hand.

Additionally, the leg 4 is configured by a wheel system, but can be configured by a crawler system or a leg system.

The configuration and shape of the robot 100 are not limited to those examples described in the present embodiment, and can be appropriately changed according to the preference of the user, the use form of the robot 100, and the like. For example, the robot 100 may be in a form of a robot arm, such as an industrial robot, or a form of a human, such as a humanoid, instead of a form of imitating a bear cub. Additionally, the robot 100 may be in a form of a mobile device, such as a drone or a vehicle, including at least one of an arm, a display, a speaker, a light, and the like.

<Configuration Example of Vital Sensor 14>

FIG. 4 is a diagram illustrating a configuration of the vital sensor 14. The vital sensor 14 is a microwave Doppler sensor including a microwave transmitter 141 and a microwave receiver 142. The microwave is an example of the electromagnetic wave.

The vital sensor 14 transmits a transmitted wave Ms, which is a microwave, toward a user 200 from the inside of the exterior member 10 of the robot 100 by the microwave transmitter 141. The vital sensor 14 receives, by the microwave receiver 142, a reflected wave Mr of the transmitted wave Ms that is reflected by the user 200.

The vital sensor 14 detects, in a non-contact manner, a minute displacement generated on a body surface due to the beating of the heart of the user 200 or the like, based on a difference between the frequency of the transmitted wave Ms and the frequency of the reflected wave Mr, by using the Doppler effect. The vital sensor 14 can acquire information, such as a heartbeat, respiration, a pulse wave, and a blood pressure, as the biological information of the user 200 based on the detected minute displacement, and output the acquired biological information to the controller 13.

However, the vital sensor 14 is not limited to the microwave Doppler sensor, and may be a sensor configured to detect a minute displacement generated on a body surface by using a change in coupling between a human body and an antenna, or may be a sensor configured to use an electromagnetic wave other than the microwave, such as near-infrared light. Additionally, the vital sensor 14 may be a millimeter wave radar, a microwave radar, or the like. Further, the vital sensor 14 preferably includes a non-contact thermometer configured to detect infrared rays or the like transmitted from the user 200 in addition to the Doppler sensor. In this case, the vital sensor 14 detects biological information of the user 200 including information on at least one of a heartbeat (a pulse), respiration, a blood pressure, or a body temperature.

In the present embodiment, the vital sensor 14 is provided inside the exterior member 10, and thus the user 200 cannot visually recognize the vital sensor 14. This suppresses the user 200 from feeling resistance to the detection of the biological information, and enables the biological information to be smoothly acquired. Additionally, the vital sensor 14 can acquire the biological information in a non-contact manner, and thus can acquire the biological information even when the user moves to some extent, unlike a contact sensor that requires the user to be in contact with the same place for a certain period of time.

Additionally, by promoting the interaction between the user 200 and the robot 100 by the hug operation of the robot 100 or the like, the robot 100 is held by the user 200 and can acquire the biological information in a state of being in contact with or in proximity to the user 200. With this, the robot 100 can acquire highly reliable biological information in which noise is suppressed.

<Configuration Example of Controller 13>

(Hardware Configuration Example)

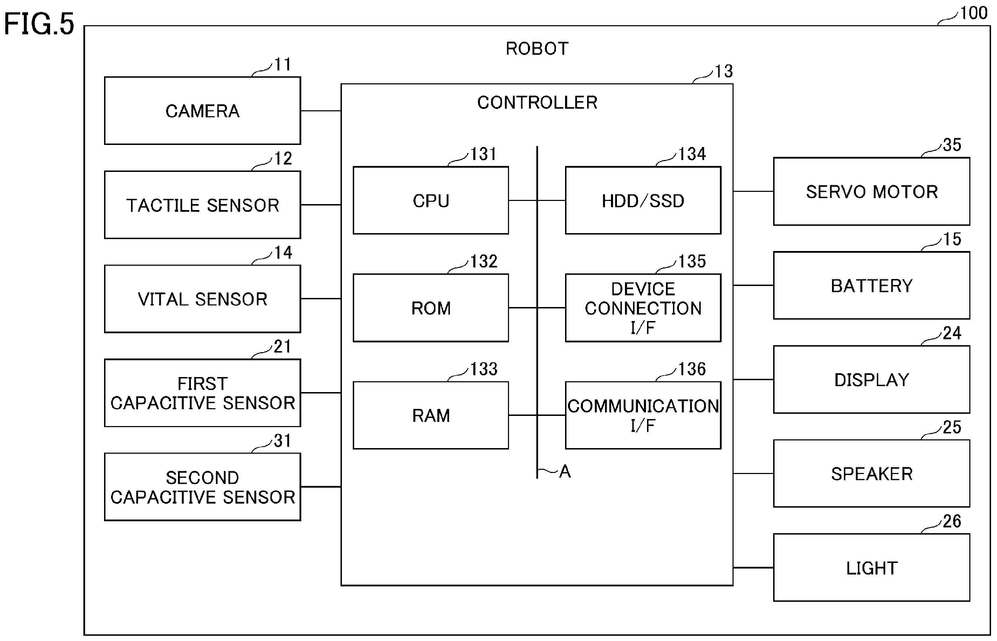

FIG. 5 is a block diagram illustrating a hardware configuration of the controller 13. The controller 13 is constructed by a computer, and includes a central processing unit (CPU) 131, a read only memory (ROM) 132, and a random access memory (RAM) 133. Additionally, the controller 13 includes a hard disk drive/solid state drive (HDD/SSD) 134, a device connection interface (I/F) 135, and a communication I/F 136. These are communicably connected to each other via a system bus A.

The CPU 131 executes control processing including various arithmetic processing. The ROM 132 stores a program used to drive the CPU 131, such as an initial program loader (IPL). The RAM 133 is used as a work area of the CPU 131. The HDD/SSD 134 stores various information, such as programs, captured images acquired by the camera 11, detection information by various sensors, such as the biological information acquired by the vital sensor 14, and the like.

The device connection I/F 135 is an interface for connecting the controller 13 to various external devices. The external devices herein are the camera 11, the tactile sensor 12, the vital sensor 14, the first capacitive sensor 21, the second capacitive sensor 31, a servo motor 35, the battery 15, and the like. Additionally, the external devices include the display 24, the speaker 25, the light 26, and the like.

Here, the servo motor 35 is a generic term of the right arm servo motor 35a, the left arm servo motor 35b, the head servo motor 35c, the right leg servo motor 35d, and the left leg servo motor 35e. Additionally, the display 24 is a generic term for the right-eye display 24a and the left-eye display 24b. Further, the light 26 is a generic term for the right-cheek light 26a

and the left-cheek light 26b.

The communication I/F 136 is an interface for communicating with an external device via a communication network or the like. For example, the controller 13 is connected to the Internet via the communication I/F 136 and communicates with the external device via the Internet.

Here, at least some of the functions realized by the CPU 131 may be realized by an electric circuit or an electronic circuit.

(Functional Configuration Example)

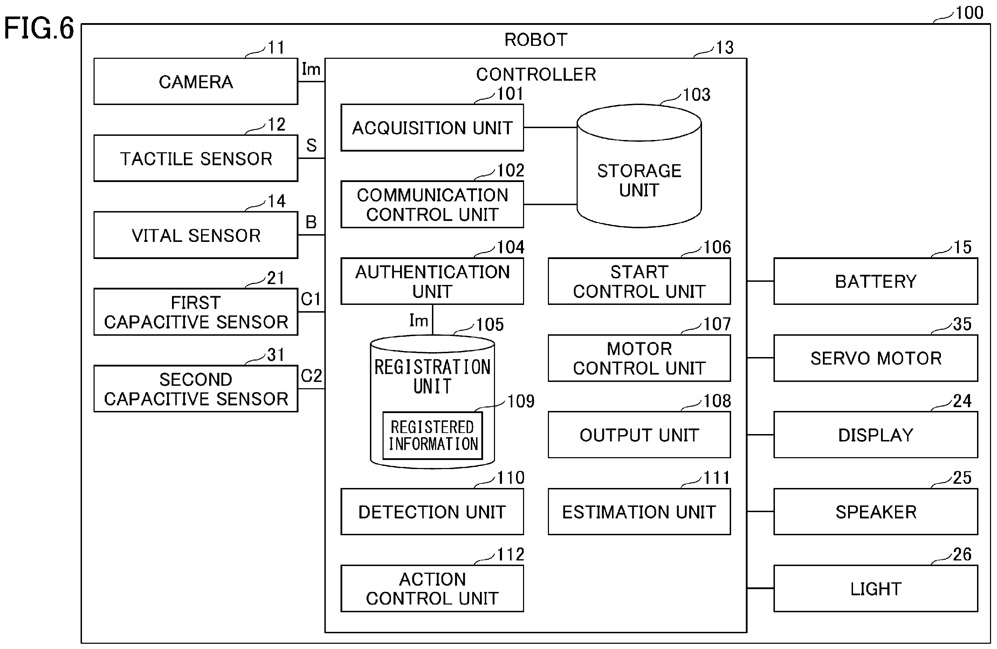

FIG. 6 is a block diagram illustrating a functional configuration of the controller 13. The controller 13 includes an acquisition unit 101, a communication control unit 102, a storage unit 103, an authentication unit 104, a registration unit 105, a start control unit 106, a motor control unit 107, and an output unit 108. Further, the controller 13 includes a detection unit 110, an estimation unit 111, and an action control unit 112.

The controller 13 can realize the functions of the acquisition unit 101 and the output unit 108 by the device connection I/F 135 or the like, and can realize the function of the communication control unit 102 by the communication I/F 136 or the like. Additionally, the controller 13 can realize the functions of the storage unit 103 and the registration unit 105 by a non-volatile memory, such as the HDD/SSD 134. Further, the functions of the authentication unit 104, the start control unit 106, and the motor control unit 107 can be realized by a processor, such as the CPU 131, executing processing defined in a program stored in a non-volatile memory, such as the ROM 132.

Additionally, the functions of the detection unit 110, the estimation unit 111, and the action control unit 112 can be realized by a processor, such as the CPU 131, executing processing defined in a program stored in a non-volatile memory, such as the ROM 132. Here, some of the above-described functions of the controller 13 may be realized by an external device, such as a PC or a server, or may be realized by distributed processing between the controller 13 and the external device. For example, the estimation unit 111 may be configured as a learning device communicably connected to the robot 100.

The acquisition unit 101 controls communication between the controller 13 and the camera 11 to acquire a captured image Im of the user 200 from the camera 11. Additionally, the acquisition unit 101 controls communication between the controller 13 and the tactile sensor 12 to acquire a tactile signal S from the tactile sensor 12. Further, the acquisition unit 101 controls communication between the controller 13 and the vital sensor 14 to acquire biological information B of the user 200 from the vital sensor 14.

Additionally, the acquisition unit 101 controls communication between the controller 13 and the first capacitive sensor 21 to acquire a first capacitance signal C1 from the first capacitive sensor 21. Additionally, the acquisition unit 101 controls communication between the controller 13 and the second capacitive sensor 31 to acquire a second capacitance signal C2 from the second capacitive sensor 31.

The communication control unit 102 controls communication with an external device via a communication network or the like. For example, the communication control unit 102 can transmit the captured image Im acquired by the camera 11, the biological information B acquired by the vital sensor 14, the tactile signal S acquired by the tactile sensor 12, and the like to the external device (for example, a learning device described later) via the communication network.

The storage unit 103 stores the biological information B acquired by the vital sensor 14. The storage unit 103 continuously stores the acquired biological information B while the acquisition unit 101 is acquiring the biological information B from the vital sensor 14. Additionally, the storage unit 103 can store information obtained from the captured image Im by the camera 11, the tactile signal S from the tactile sensor 12, the first capacitance signal C1 from the first capacitive sensor 21, and the second capacitance signal C2 from the second capacitive sensor 31.

The authentication unit 104 performs personal authentication of the user 200 based on the captured image Im of the user 200 captured by the camera 11. For example, the authentication unit 104 performs face authentication by referring to registered information 109 of a face image registered in advance in the registration unit 105, based on the captured image Im including the face of the user 200 captured by the camera 11. With this, the user 200 currently in contact with or in proximity to the robot 100 can be associated with the personal information registered in advance, and the biological information B acquired by the vital sensor 14 can be associated with the personal information. Additionally, the controller 13 can also perform control so as to stop the start of the acquisition of the biological information by the vital sensor 14 when the face image included in the captured image Im is not registered in the registration unit 105.

The start control unit 106 causes the vital sensor 14 to start acquiring the biological information B. For example, when the contact or proximity of the user 200 with respect to the robot 100 is detected by the detection unit 110, the start control unit 106 turns on a switch or the like for supplying power from the battery 15 to the vital sensor 14. With this, the start control unit 106 causes the vital sensor 14 to start acquiring the biological information B.

The detection unit 110 detects the presence or approach of the user 200 around the robot 100 based on the captured image Im and the like obtained by the camera 11. The detection unit 110 preferably detects the distance from the robot 100 to the user 200 based on the captured image Im (the distance image) obtained by the camera 11. Additionally, the detection unit 110 detects the information on the contact of the user 200 with respect to the robot 100 based on the tactile signal S from the tactile sensor 12. Further, the detection unit 110 may detect the information on the contact of the user 200 with respect to the robot 100 based on the first capacitance signal C1 or the second capacitance signal C2.

The estimation unit 111 estimates a predetermined action an (n is an identification number of the action a) of the robot 100 suitable for the state st (t is time) of the interaction style of the user 200, based on the information on the contact of the user 200 with respect to the robot 100. In the present embodiment, the estimation unit 111 estimates the predetermined action at (t is time) of the robot 100 suitable for the state st of the interaction style of the user 200 by performing reinforcement learning. However, the estimation unit 111 may estimate the predetermined action at of the robot 100 suitable for the state st of the interaction style of the user 200 by performing other machine learning, such as supervised learning, semi-supervised learning, or unsupervised learning.

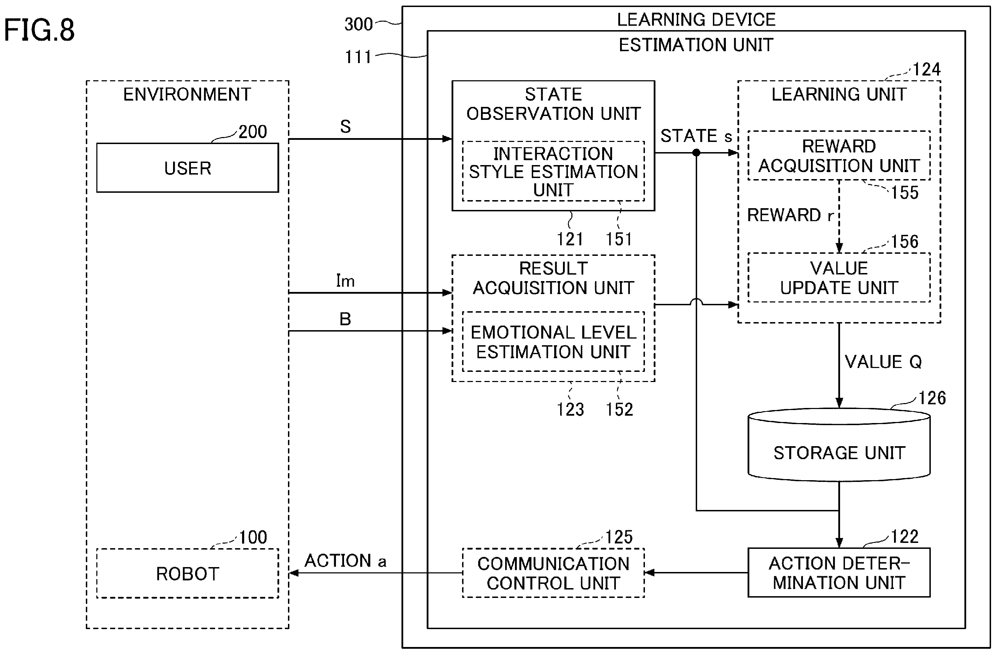

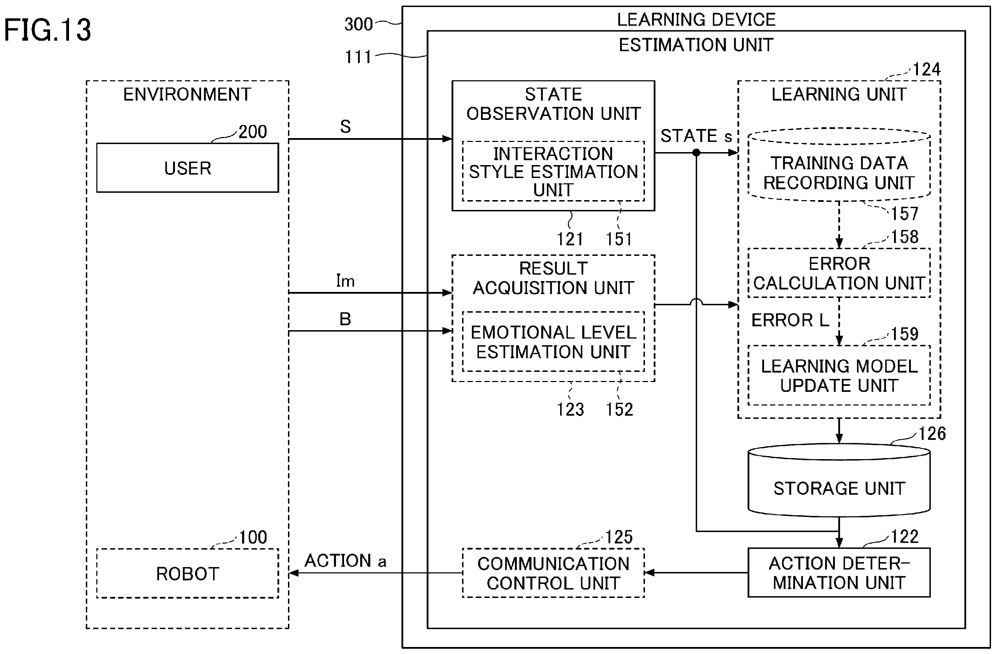

The configuration of the estimation unit 111 that performs reinforcement learning will be described in detail later with reference to FIG. 8. Additionally, the configuration of the estimation unit 111 that performs supervised learning will be described in detail later with reference to FIG. 13. Further, when the learning has converged, the estimation unit 111 may estimate the action at of the robot 100 suitable for the state st of the interaction style of the user 200, using a trained learning model (in the present embodiment, a trained action value table or a trained neural network). In this case, the estimation unit 111 estimates a predetermined action at of the robot 100 suitable for the state st of the interaction style of the user 200 by predetermined logic or a predetermined algorithm.

The action control unit 112 instructs the motor control unit 107 or the output unit 108 to perform the action at of the robot 100. Additionally, the action control unit 112 instructs to perform a predetermined action at that induces a favorable response of the user 200 in accordance with the state st of the interaction style of the user 200. The robot 100 performs the predetermined action at that matches the interaction style of the user 200, and thus actions unnatural to the user 200 can be reduced. This allows the user 200 to interact with the robot 100 in the long term, and can provide comfort to the user 200.

Here, it is preferable that the predetermined action at of the robot 100 is an action that imitates the interaction style of the user 200, such as, for example, "hugging" for a relatively long time, as a reaction when the user 200 hugs for a relatively long time. Additionally, it is preferable that the predetermined action at of the robot 100 is an action that imitates at least one of the duration of the interaction by the user 200, the contact change rate (the contact speed or the contact acceleration) of the user 200, or the contact force of the user 200.

Additionally, it is preferable that the predetermined action at of the robot 100 is an action that matches the situation of the busy user 200, such as, for example, "changing expression" for a relatively short time (causing cheeks to flicker or smiling with eyes), as a reaction when the user 200 performs a one-touch action for a relatively short time. Furthermore, it is preferable that the predetermined action at of the robot 100 is an action that matches the interaction style of the user 200, such as, for example, "outputting a voice" (outputting a calling voice) for a relatively short time, as a reaction when the user 200 gently strokes the head for a relatively short time. Additionally, it is preferable that the predetermined action at of the robot 100 is an action that matches a playful way or a playing style of the user 200, such as, for example, "being frightened" or "changing expression" (shedding tears or opening and closing eyes), as a reaction when the user 200 pats the robot 100.

The storage unit 103 stores information on a predefined action an of the robot 100. The information on the action an of the robot 100 is managed by, for example, a table of a database. The following tables 1A and 1B are examples of an action table TB1 related to the action an of the robot 100. The action table TB1 includes an action ID for identifying the action an of the robot 100, an action content of the robot 100, a command content of the action an, the action time per one cycle, and an example of use.

[Table 1A]

| ACTION ID | ACTION CONTENT | COMMAND CONTENT | ACTION TIME | EXAMPLE OF USE |
|---|---|---|---|---|
| a0 | HUG (HOLD PERSON WITH ARMS SPREAD TO EMBHACE PERSON) | 35: TRACKING COMMAND, + TAUGHT COMMAND, ROTATIONAL SPEED 100 mm/s | 10 s/cycle | RELATIVELY LONG INTERACTION, REACTION WHEN BEING HUGGED OR THE LIKE |
| a1 | TAP (TOUCH PERSON'S BODY (FOR EXAMPLE, BODY SIDE, LEG, OR ARM) WITH ARM) | 35: TRACKING COMMAND + TAUGHT COMMAND, ROTATIONAL SPEED 100 mm/s | 5 s/cycle | RELATIVELY MODERATE INTERACTION, REACTION WHEN BEING TAPPED OR THE LIKE |

(continued)

| ACTION ID | ACTION CONTENT | COMMAND CONTENT | ACTION TIME | EXAMPLE OF USE |
|---|---|---|---|---|
| a2 | RUB (RUB PERSON'S BODY (FOR EXAMPLE, BODY SIDE, LEG, OR ARM) WITH ARM) | 35: TRACKING COMMAND + TAUGHT COMMAND, ROTATIONAL SPEED 100 mm/s | 3 s/cycle | RELATIVELY SHORT INTERACTION, REACTION WHEN BEING RUBBED OR THE LIKE |
| a3 | PAT (PAT PERSON'S BODY (FOR EXAMPLE, BODY SIDE, LEG OR ARM) VERTICALLY WITH FORCE) | 35: TRACKING COMMAND + TAUGHT COMMAND, ROTATIONAL SPEED 200 mm/s | 3 s/cycle | RELATIVELY SHORT INTERACTION, REACTION WHEN BEING PATTED OR THE LIKE |
| a4 | SLAP (SLAP PERSON'S BODY (FOR EXAMPLE, BODY SIDE, LEG, OR ARM) HORIZONTALLY WITH FORCE) | 35: TRACKING COMMAND + TAUGHT COMMAND, ROTATIONAL SPEED 200 mm/s | 3 s/cycle | RELATIVELY SHORT INTERACTION, REACTION WHEN BEING SLAPPED OR THE LIKE |
| a5 | PUSH (TRY TO PUSH PERSON AWAY) | 35: TRACKING COMMAND + TAUGHT COMMAND, ROTATIONAL SPEED 100 mm/s | 2 s/cycle | RELATIVELY SHORT INTERACTION, REACTION WHEN BEING PUSHED OR THE LIKE |
| a6 | HOLD HAND (HOLD PERSON'S HAND WITH ROBOT'S HAND) | 35: TRACKING COMMAND + TAUGHT COMMAND, ROTATIONAL SPEED 100 mm/s | 5 s/cycle | RELATIVELY MODERATE INTRACTION, REACTION WHEN HAND IS TOUCHED OR THE LIKE |
| a7 | LOOK UP AT FACE | 35: RACKING COMMAND + TAUGHT COMMAND, 100 | 10 s/cycle | RELATIVELY LONG INTERACTION, REACTION WHEN BEING HUGGED OR THE LIKE |
| a8 | RUB FACE (RUB FACE OR NOSE AGAINST PERSON'S BODY) | 35: TRACKING COMMAND + TAUGHT COMMAND, ROTATIONAL SPEED 100 mm/s | 5 s/cycle | RELATIVELY MODERATE INTERACTION, REACTION WHEN BEING HUGGED OR THE LIKE |
| a9 | LEAN (LEAN BACK AGAINST PERSON) | 35: TRACKING COMMAND + TAUGHT COMMAND, ROTATIONAL SPEED 100 mm/s | 10 s/cycle | RELATIVELY MODERATE INTERACTION, REACTION WHEN BEING STROKED OR THE LIKE |
| a10 | STROKE (STROKE HEAD) | 35: TRACKING COMMAND + TAUGHT COMMAND, ROTATIONAL SPEED 100 mm/s | 3 s/cycle | RELATIVELY MODERATE INTERACTION, REACTION WHEN BEING STROKED OR THE LIKE |
| a11 | TRY TO ESCAPE (FIDGET OR TRY TO ESCAPE WHEN STAYING IN SAME POSITION FOR LONG TIME) | 35: TRACKING COMMAND + TAUGHT COMMAND, ROTATIONAL SPEED 200 mm/s | 5 s/cycle | RELATIVELY MODERATE INTERACTION, REACTION WHEN BEING HUGGED OR THE LIKE |

(continued)

| ACTION ID | ACTION CONTENT | COMMAND CONTENT | ACTION TIME | EXAMPLE OF USE |
|---|---|---|---|---|
| a12 | GIVE PAW (PLACE HAND ON PERSON'S HAND) | 35: TRACKING COMMAND + TAUGHT COMMAND, ROTATIONAL SPEED 100 mm/s | 3 s/cycle | RELATIVELY MODERATE INTERACTION, REACTION WHEN HAND IS TOUCHED OR THE LIKE |
| a13 | HIGH FIVE (BRING HANDS TO MEET PERSON'S RAISED HANDS) | 35: TRACKING COMMAND + TAUGHT COMMAND, ROTATIONAL SPEED 200 mm/s | 3 s/cycle | RELATIVELY MODERATE INTERACTION, REACTION WHEN HAND IS TOUCHED OR THE LIKE |
| a14 | SHOW SIGN OF UNDERSTANDING (NOD) | 35: ROTATIONAL ANGLE + 10 DEGREES ROTIONAL SPEED 100 mm/s | 2 s/cycle | RELATIVELY SHORT INTERACTION REACTION TO SINGLE TOUCH OR THE LIKE |
| a15 | SPREAD ARMS (SPREAD ARMS TO MAKE IT EASIER TO HUG) | 35: TAUGHT COMMAND, ROTATIONAL SPEED 100 mm/s | 5 s/cycle | RELATIVELY ELY MODERATE INTERACTION REACTION WHEN BEING HUGGED OR THE LIKE |

[Table 1B]

| ACTION ID | ACTION CONTENT | COMMAND CONTENT | ACTION TIME | EXAMPLE OF USE |
|---|---|---|---|---|
| a16 | BE FRIGHTENED (TREMBLE, PUT HANDS ON HEAD AND LOWER HEAD TO GUARD ITSELF) | 35: TAUGHT COMMAND, ROTATIONAL SPEED 200 mm/s | 3 s/cycle | RELATIVELY SHORT INTERACTION, REACTION WHEN BEING PATTED OR THE LIKE |
| a17 | FLAP HANDS (SPREAD HANDS AND FLAP HANDS UP AND DOWN) | 35: TAUGHT COMMAND, ROTATIONAL SPEED 200 mm/s | 3 s/cycle | RELATIVELY SHORT INTERACTION, REACTION TO SINGLE TOUCH OR THE LIKE |
| a18 | EMIT SOUND (EMIT CALLING SOUND. WORRIED SOUND, SAD SOUND, OR CONFUSED SOUND) | 25: EMIT SOUND | 2 s/cycle | RELATIVELY SHORT INTERACTION, REACTION TO SINGLE TOUCH OR THE LIKE |
| a19 | CHANGE EXPRESSION 1 (CAUSE CHEEK TO FLICKER OR COLOR TO CHANGE) | 26: FLICKER/ CHANGE COLOR | 5 s/cycle | RELATIVELY MODERATE INTERACTION, REACTION WHEN BEING HUGGED OR THE LIKE |
| a20 | CHANGE EXPRESSION 2 (DEMONSTRATE SAME EXPRESSION BY SMILING WITH EYES, SHEDDING TEARS, OR THE LIKE) | 24: DISPLAY IMAGE | 3 s/cycle | RELATIVELY SHORT INTERACTION, REACTION WHEN BEING HUGGED OR THE LIKE |
| a21 | CHANGE EXPRESSION 3 (OPEN AND CLOSE EYES) | 24: DISPLAY IMAGE (MAY BE COMMAND TO PHYSICALLY MOVE EYELID) | 2 s/cycle | RELATIVELY SHORT INTERACTION, REACTION WHEN BEING SLAPPED OR THE LIKE |

(continued)

| ACTION ID | ACTION CONTENT | COMMAND CONTENT | ACTION TIME | EXAMPLE OF USE |
|---|---|---|---|---|
| a22 | CHANGE EXPRESSION 4 (CHANGE PUPIL OR IRIS SIZE AND CAUSE EYES TO GLOW RED) | 24: DISPLAY IMAGE | 2 s/cycle | RELATIVELY SHORT INTERACTION, REACTION WHEN BEING PATTED OR THE LIKE |
| a23 | CHANGE EXPRESSION 5 (DISPLAY OR MOVE NOSE, MOUTH EYEBROW, AND EARS) | 24: DISPLAY IMAGE | 3 s/cycle | RELATIVELY SHORT INTERACTION, REACTION WHEN BEING STROKED OR THE LIKE |
| a24 | CHANGE EXPRESSION 6 (MOVE EYES TO FOLLOW PERSON) | 24: DISPLAY IMAGE | 10 s/cycle | RELATIVELY LONG INTERACTION, REACTION TO SINGLE TOUCH OR THE LIKE |
| a25 | CHANGE EXPRESSION 7 (DISPLAY TEXT OR SYMBOLS DIRECTLY IN EYES) | 24: DISPLAY CHARACTER STRING | 3 s/cycle | RELATIVELY SHORT INTERACTION, REACTION WHEN BEING HUGGED OR THE LIKE |
| a26 | TILT HEAD SIDEWAYS | 35: TAUGHT COMMAND, ROTATIONAL SPEED 200 mm/s | 2 s/cycle | RELATIVELY SHORT INTERACTION, REACTION WHEN BEING SLAPPED OR THE LIKE |
| a27 | RESPOND WHEN EYES MEET (PERFORM ONE OF ACTIONS WHEN EYES MEET) | DEPENDS ON ACTION | DEPENDS ON ACTION | DEPENDS ON ACTION |
| an | ... | ... | ... | ... |

A symbol in the command content in each of Table 1A and Table 1B is a symbol representing a control target. Additionally, a taught command is an operation command that is previously taught using a teaching method, such as offline teaching, online teaching, or direct teaching. Additionally, a tracking command is an operation command to track the position and posture of the user 200 based on various sensor information, such as the captured image Im (the distance image).

The motor control unit 107 controls the driving of the servo motor 35 in response to a command content of the action at of the robot 100 from the action control unit 112. When the action content of the robot 100 is, for example, "hug", the motor control unit 107 controls the position and the posture of the robot 100 with respect to the position and the posture of the user 200 by the tracking command, and then executes the operation command of "hug" taught in advance.

The output unit 108 controls communication between the controller 13 and the display 24 in response to a command to perform the action at of the robot 100 from the action control unit 112. When the action content of the robot 100 is, for example, "smile with eyes", the output unit 108 outputs a display command of a smile image to the right-eye display 24a and the left-eye display 24b.

Additionally, the output unit 108 controls communication between the controller 13 and the speaker 25 in response to a command to perform the action at of the robot 100 from the action control unit 112. When the action content of the robot 100 is, for example, "emit a (calling) sound", the output unit 108 outputs a calling sound emit signal to the speaker 25.

Further, the output unit 108 controls communication between the controller 13 and the light 26 in response to a command to perform the action at of the robot 100 from the action control unit 112. When the action content of the robot 100 is, for example, "cause the cheeks to flicker", the output unit 108 outputs an on/off signal to switching elements of the right-cheek light 26a and the left-cheek light 26b.

<Configuration of Estimation unit 111>

(Hardware Configuration Example)

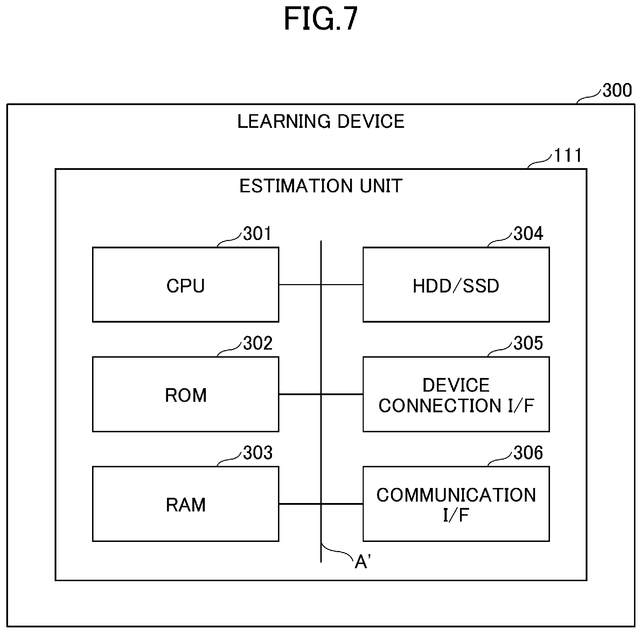

FIG. 7 is a block diagram illustrating a hardware configuration of the estimation unit 111. FIG. 7 illustrates an example in which the estimation unit 111 illustrated in FIG. 6 is configured as a learning device 300 communicably connected to the robot 100. However, the function of the estimation unit 111 may be provided inside the robot 100 as illustrated in FIG. 6.

The estimation unit 111 is constructed by a computer and includes a CPU 301, a ROM 302, a RAM 303, an HDD/SSD 304, a device connection I/F 305, and a communication I/F 306. These are communicably connected to each other via a system bus A'. Here, in order to improve the learning processing capability of the computer, the learning device 300 preferably includes a graphics processing unit (GPU) or is configured by a PC cluster or the like including multiple computers.

The CPU 301 performs control processing including various arithmetic processing. The ROM 302 stores a program used to drive the CPU 301, such as an initial program loader (IPL). The RAM 303 is used as a work area of the CPU 301. The HDD/SSD 304 stores various information, such as a program, the captured image Im acquired by the camera 11, the biological information B acquired by the vital sensor 14, detection information by various sensors, or the like.

The device connection I/F 305 is an interface for connecting the estimation unit 111 to various external devices. The external devices herein are the camera 11, the tactile sensor 12, the vital sensor 14, the first capacitive sensor 21, the second capacitive sensor 31, or the like. However, the estimation unit 111 may acquire the detection information of these various sensors and the like from the robot 100 via the communication I/F 306 to be described later.

The communication I/F 306 is an interface for communicating with an external device, such as the robot 100, via a communication network or the like. For example, the estimation unit 111 is connected to the Internet by the communication I/F 136 and communicates with an external device via the Internet. Additionally, the estimation unit 111 directly communicates with an external device wirelessly through the communication I/F 306.

Here, at least some of the functions realized by the CPU 301 may be realized by an electric circuit or an electronic circuit.

(Functional Configuration Example)

FIG. 8 is a block diagram illustrating a functional configuration of the estimation unit 111. The estimation unit 111 includes a state observation unit 121, an action determination unit 122, a result acquisition unit 123, a learning unit 124, a communication control unit 125, and a storage unit 126. Here, when the function of the estimation unit 111 is provided inside the robot 100, the communication control unit 125 and the storage unit 126 are not necessary. Additionally, when the estimation unit 111 estimates the action at of the robot 100 suitable for the state st of the interaction style of the user 200, using a trained learning model LM or based on a predetermined algorithm, the result acquisition unit 123 and the learning unit 124 are not necessary.

Various functions of the state observation unit 121, the action determination unit 122, the result acquisition unit 123, and the learning unit 124 can be realized by a processor, such as the CPU 301, performing processing defined in a program stored in a non-volatile memory, such as the ROM 302, or the like. Additionally, the function of the communication control unit 125 can be realized by the communication I/F 306 or the like. Further, the function of the storage unit 126 can be realized by a non-volatile memory, such as the HDD/SDD 304.

The estimation unit 111 of the present embodiment estimates the action at of the robot 100 suitable for the state st of the interaction style of the user 200 by performing reinforcement learning. As an algorithm of the reinforcement learning, any one of Q learning, Sarsa, a Monte Carlo method, or deep reinforcement learning (reinforcement learning using Deep-Q-Network (DQN)) can be used. In the following, Q-learning and deep reinforcement learning will be used as examples for the description.

The state observation unit 121 performs various processes for observing the state st of the user 200. The state observation unit 121 observes the state st of the interaction style of the user 200 based on the information on the contact of the user 200 with respect to the robot 100. The information on the contact of the user 200 in this example is the tactile signal S, but may be the first capacitance signal S1 or the second capacitance signal S2.

The state observation unit 121 includes an interaction style estimation unit 151. The interaction style estimation unit 151 performs one process in the state observation unit 121. The function of the interaction style estimation unit 151 may be performed by another external device communicably connected to the learning device 300. The interaction style estimation unit 151 estimates the state st of the interaction style of the user 200 based on the information on the contact of the user 200. The interaction style of the user 200 is classified into a predetermined state based on the information on at least one of the contact part, the contact range, the contact time, or the contact force of the robot 100. For example, the interaction style of the user 200 is classified into a predetermined state sn including any one of "hug", "tap", "rub", "pat", "push", "hold a hand, "rub a face", "stroke", "give a paw", or the like. Here, the interaction style of the user 200 may be substantially the same as the action content of the robot 100 indicated in Tables 1A and 1B.

The interaction style estimation unit 151 estimates the interaction style, using a learned learning model or while performing machine learning. For example, the interaction style estimation unit 151 performs deep learning, by using training data, on a neural network learning model configured to receive the information on the contact of the user 200 (the information on the contact part, the contact range, and the contact time) and output the interaction style of the user 200. With this, when the information on the new contact when the user 200 has hugged the robot 100 is input into the neural network learning model and artificial intelligence (AI) analysis is performed, the interaction style of the user 200 can be classified as "hug".

The storage unit 126 stores information on the state sn (n is the identification number of the state s) of the interaction style of the user 200. The information on the state sn of the interaction style is managed, for example, by a table in a database. Table 2 below is an example of a state table TB2 related to the state sn of the interaction style of the user 200. The state table TB2 includes a state ID for identifying the state sn of the interaction style of the user 200 and a state content of the interaction style of the user 200. There are the states sn of the interaction style of the user 200 that are equal in number to the number of predefined types of interaction styles of the user 200. Here, when the function of the estimation unit 111 is provided inside the robot 100, the storage unit 103 of the robot 100 stores the state table TB2.

[Table 2]

| STATE ID | STATE CONTENT |
|---|---|
| s0 | INTERACTION STYLE: HUG, CONTACT TIME: 1 S TO 3 S, CONTACT FORCE: 1 N TO 3 N |
| s1 | INTERACTION STYLE: HUG, CONTACT TIME: 3 S TO 5 S, CONTACT FORCE: 1 N TO 3 N |
| s2 | INTERACTION STYLE: HUG, CONTACT TIME: 5 S OR GREATER, CONTACT FORCE: 1 N TO 3 N |
| s3 | INTERACTION STYLE: TAP, CONTACT TIME: 1 S TO 3 S, CONTACT FORCE: 1 N TO 3 N |
| s4 | INTERACTION STYLE: TAP, CONTACT TIME: 3 S TO 5 S, CONTACT FORCE: 1 N TO 3 N |
| s5 | INTERACTION STYLE: TAP, CONTACT TIME: 5 S OR GREATER, CONTACT FORCE: 1 N TO 3 N |
| s6 | INTERACTION STYLE: RUB, CONTACT TIME: 1 S TO 3 S, CONTACT FORCE: 1 N TO 3 N |
| sn | ... |

Here, the state content of the interaction style of the user 200 includes the interaction style of the user 200, the contact time, and the contact force, but may further include the contact change rate (the contact speed, the contact acceleration, or the like) of the user 200 with respect to the robot 100 and the frequency of the interaction style of the user (the number of times the user hugs the robot 100 per day or the like).

When the state st of the interaction style of the user 200 is, for example, "the interaction style: hug, the contact time: 1 s to 3 s, the contact force: 1 N to 3 N", it is observed as a state in which the user 200 expects a relatively short interaction because the hug is relatively short. Therefore, if the robot 100 performs the "hug" action at for a relatively long time, for example, the action becomes unnatural for the user 200. When the user 200 feels as if the user 200 is taking care of the robot 100, the user 200 finally gets bored with the robot 100 and stops being company for the robot 100. When the robot 100 performs the "hug" action at for a relatively short time, for example, it is likely to induce a favorable response from the user 200.

Additionally, when the state st of the interaction style of the user 200 is "the interaction style: hug, the contact time: 3 s to 5 s, the contact force: 3 N to 5 N", it is observed that the user 200 expects relatively strong interaction because the hug is relatively strong. Therefore, if the robot 100 performs the relatively weak "hug" action at, for example, there is a possibility that the action does not conform to the image of the interaction desired by the user 200. If the action does not conform to the image of the interaction of the user 200, the user 200 will feel uncomfortable with the robot 100, and will become bored and leave the robot 100. If the robot 100 performs the action at that matches the interaction style of the user 200, such as "hug" or "trying to get out", for example, relatively strongly, it is likely to induce a favorable response from the user 200. As described, it is inferred that there is a certain correlation between the state st of the interaction style of the user 200 and the value Q of the action at of the robot 100.

The action determination unit 122 determines the action at of the robot 100 for the state st of the interaction style of the user 200 based on the value Q of the action at-1 (t-1 is the previous time). The storage unit 126 stores an action value table TB3 representing the value Q of the action an of the robot for the state sn of the interaction style of the user 200. The following Table 3 is an example of the action value table TB3 at a certain time t.

[Table 3]

|  | a0 | a1 | a2 | a3 | a4 | a5 | a6 | a7 | a8 | a9 | a10 | an |
|---|---|---|---|---|---|---|---|---|---|---|---|---|
| s0 | +2 | 0 | +1 | -3 | -2 | -1 | +1 | +2 | +1 | +1 | 0 | ... |
| s1 | +3 | 0 | +1 | -4 | -3 | -2 | +1 | +3 | +2 | +1 | +1 | ... |
| s2 | +1 | -1 | 0 | -2 | -1 | -1 | +2 | +1 | +1 | +1 | -1 | ... |
| s3 | +2 | -2 | -1 | -3 | -2 | -2 | +3 | +2 | +1 | -1 | 0 | ... |
| s4 | +2 | 0 | +1 | -1 | 0 | -1 | 0 | +3 | +2 | 0 | -1 | ... |
| s5 | +2 | 0 | +2 | -2 | -1 | -2 | 0 | +3 | +3 | -1 | -1 | ... |
| s6 | -2 | 0 | -1 | -5 | -4 | -3 | -1 | +1 | -2 | -2 | -2 | ... |
| sn | ... | ... | ... | ... | ... | ... | ... | ... | ... | ... | ... | ... |

In an initial state (time t = 0 or the like) of the action value table TB3, the value Q of the action at of the robot 100 for the state st of the interaction style of the user 200 is not known. Therefore, the action determination unit 122 preferably initializes the values Q of all the actions an by random numbers and selects one action at from among the predetermined actions an.

Additionally, when the action determination unit 122 continues to select only the action at having the highest value Q and advances learning, the state does not change to a state st+1 (t+1 is a next timing) indicating a previously unexperienced way of interaction. Therefore, the action determination unit 122 previously selects the action at having the highest value Q with the probability 1-$\varepsilon$ and selects one action at from among all the actions an with the probability $\varepsilon$, using the $\varepsilon$-greedy method or the like.

For example, when the state st of the interaction style of the user 200 is "interaction style: hug, contact time 5 s or greater, contact force 1 N to 3 N", the action determination unit 122 selects an action a0: "hug" having the highest value Q with a probability of 0.9 ($\varepsilon$ = 0.1). This increases the possibility that the user 200 demonstrates a favorable response. Additionally, the action determination unit 122 selects a suitable action at from among all the actions an with a probability of 0.1. This makes the user 200 feel that the robot 100 selects the action at under its free will, and the user 200 does not get bored with the robot 100. Here, when there is no highest value Q and there are multiple same values Q, the action determination unit 122 selects any one action at from among the equal highest values Q by a random number.

The communication control unit 125 transmits, to the robot 100, a command to perform the action at determined by the action determination unit 122. The robot 100 receives the command to perform the action at by the communication control unit 102. Then, the action control unit 112 instructs the motor control unit 107 or the output unit 108 to perform the action at of the robot 100. With this, the robot 100 performs the action at that induces a favorable response of the user 200 in accordance with the state st of the interaction style of the user 200.

The result acquisition unit 123 acquires information on a result of quality of the response of the user 200 as a result of the action at of the robot 100. The information on the result of the quality of the response of the user 200 preferably includes information on the emotion of the user 200. The information on the emotion of the user 200 includes at least a positive or negative emotional level of the user 200.

The result acquisition unit 123 includes an emotional level estimation unit 152. The function of the emotional level estimation unit 152 may be performed by another external device communicably connected to the learning device 300. The emotional level estimation unit 152 estimates the emotional level of the user 200 based the captured image Im (the face image) of the user 200 and the information on at least one of the heartbeat, the respiration, the blood pressure, or the body temperature of the user 200.

For example, the emotion of the user 200 is classified into a predetermined state based on the face image of the user 200 and at least one of the heart rate [bpm], the respiratory rate [times/min], the blood pressure value [mmHg], or the body temperature [°C] of the user 200. For example, the emotion of the user 200 is preferably classified into at least one of "neutral", "happiness", "sadness", "disgust", "fear", "surprise", or "anger". The emotion of the user 200 may be a combination of "fear" and "surprise", for example.

The emotional level estimation unit 152 estimates the emotion, using a trained learning model or while performing machine learning. For example, the emotional level estimation unit 152 performs deep learning on a learning model of a neural network that uses the face image, the heart rate, and the blood pressure value of the user 200 as inputs and the emotion of the user 200 including "neutral", "happiness", "sadness", and "disgust" as an output, using learning data. With this, when a new face image, heart rate, and blood pressure value when the user 200 smiles are input into the learning model of the neural network and analyzed by artificial intelligence (AI), the emotion of the user 200 can be classified as "happiness".

Then, the emotional level estimation unit 152 estimates the emotional level as "neutral" when classifying the emotion of the user 200 as "neutral", and estimates the emotional level as "very positive" when classifying the emotion as "happiness". Additionally, the emotional level estimation unit 152 estimates the emotional level as "negative" when classifying the emotion of the user 200 as "sadness", and estimates the emotional level as "very negative" when classifying the emotion as "disgust".

As described above, the result acquisition unit 123 acquires the result of the quality of the response of the user 200 (for example, the emotional level of the user 200) as the result of the action at of the robot 100. In particular, when the emotional level estimation unit 152 estimates the emotional level of the user 200 as "positive", the result acquisition unit 123 acquires a result indicating that "a favorable response of the user 200" is indicated.

The learning unit 124 generates a learning model LM configured to receive the state st of the interaction style of the user 200 and output the value Q(st, at) of the action at of the robot 100, by reinforcement learning. Additionally, the learning unit 124 updates the learning model LM based on the result of the quality of the response of the user 200. In the present embodiment, the learning unit 124 acquires a reward r for the action at of the robot 100 based on the result of the quality of the response of the user 200, and updates the value Q (the action value table TB3) of the action at for the state st of the interaction style of the user 200, based on the reward r.

The learning unit 124 includes a reward acquisition unit 155 and a value update unit 156. The reward acquisition unit 155 acquires the reward r for the action at of the robot 100 based on the result of the quality of the response of the user 200 (for example, the emotional level of the user 200) .

The storage unit 126 stores information on a predetermined reward rn (n is an identification number of the reward r) based on the result of the quality of the response of the user 200. The information on the reward rn is managed by, for example, a table of a database. Table 4 below is an example of a reward table TB4 indicating the predetermined reward rn. The reward table TB4 includes a reward ID for identifying the reward rn, a result of the quality of the response of the user 200, and the reward rn based on the result of the quality of the response of the user 200. There are rewards rn that are equal in number to the number of the results of the quality of the response of the user 200 defined in advance.

[Table 4]

| REWARD ID | RESULT OF QUALITY OF REACTION | REWARD |
|---|---|---|
| r0 | EMOTIONAL LEVEL: NEUTRAL | 0 |
| r1 | EMOTIONAL LEVEL: SLIGHTLY POSITIVE | +1 |
| r2 | EMOTIONAL LEVEL: POSITIVE | +2 |
| r3 | EMOTIONAL LEVEL: VERY POSITIVE | +3 |
| r4 | EMOTIONAL LEVEL: SLIGHTLY NEGATIVE | -1 |
| r5 | EMOTIONAL LEVEL: NEGATIVE | -2 |
| r6 | EMOTIONAL LEVEL: VERY NEGATIVE | -3 |
| rn | ... | ... |

The reward acquisition unit 155 acquires the predetermined reward rn corresponding to the emotional level of the user 200. As the emotional level of the user 200 is more "positive", the reward rn is preferably defined as a plus reward rn. Additionally, as the emotional level of the user 200 is more "negative", the reward rn is preferably defined as a minus reward rn. When the emotional level of the user 200 is "neutral", the reward acquisition unit 155 acquires a zero reward rn.

The value update unit 156 updates the value Q of the action at of the robot 100 for the state st of the interaction style of the user 200 based on the predetermined reward rn. In the Q-learning, the value Q is updated by the following Equation 1.

[Equation 1]

$$Q(st, at) = Q(st, at) + \alpha \left( r + \gamma \max Q(st+1, at+1) - Q(st, at) \right) \quad \cdots \text{Equation 1}$$

In Equation 1, st is the state of the interaction style of the user 200 at a certain timing t, and at is the action of the robot 100 at a certain timing t. The action at of the robot 100 changes the state of the interaction style of the user 200 to *st+1* (t+1 is the next timing). *r* is a reward obtained by the change in the state of the interaction style. Additionally, the term with max is obtained by multiplying the value Q in the case where an action at+1 having the highest value Q known at that time is selected under the state st+1 of the interaction style by a discount rate $\gamma$ ($0 < \gamma \leq 1$). Additionally, $\alpha$ is a learning coefficient ($0 < \gamma \leq 1$), and adjusts the speed of learning.

Equation 1 represents a method of updating the value Q(st, at) of the action at for the state st of the interaction style of the user 200 based on the reward r returned as a result of the action at of the robot 100. When the value Q of a certain action at of the robot 100 for a certain state st of the interaction style of the user 200 is less than the sum of the reward r and the discount value Q of the best action at+1 for the next state st+1 of the interaction style, the value Q(st, at) is increased. Conversely, when the value of the action at of the robot 100 for the state st of the interaction style of the user 200 is greater than the sum of the reward r and the discount value Q of the best action at+1 for the next state st+1 of the interaction style, the value Q(st, at) is decreased. Therefore, Equation 1 causes the value Q of a certain action at in a certain state st of the interaction style to approach the sum of the resulting reward r and the discount value Q of the best action at+1 for the next state st+1 of the interaction style.

The value update unit 156 updates the value Q(sn, an) of the action value table TB3 by Equation 1. Then, the state observation unit 121 observes the next state st+1 of the interaction style of the user 200. The action determination unit 122 determines the action at+1 of the robot 100 for the next state st+1 of the interaction style of the user 200 by the ε-greedy method or the like based on the value Q of the action at (in this example, the action value table TB3).

The communication control unit 125 transmits, to the robot 100, a command to perform the determined action at+1. The robot 100 receives the command of the action at+1 from the learning device 300 via the communication control unit 102. Then, the action control unit 112 instructs the motor control unit 107 or the output unit 108 to perform the action at+1 of the robot 100. With this, the robot 100 performs the action at+1 suitable for the state st+1 of the interaction style of the user 200.

Here, as a method of expressing the value Q(st, at) on the computer, as described above, there is a method of storing the value Q(st, at) as the action value table TB3 for the combination of the states sn of the interaction styles of all the users 200 and the actions an of all the robots 100. Additionally, there is a method of preparing an action value function that approximates the action value table TB3. The latter method can be realized by adjusting parameters of an approximation function by a method such as a stochastic gradient descent method. For example, as the approximate function, the learning unit 124 preferably generates, by deep reinforcement learning, a learning model of a neural network (DQN) configured to receive the state st of the interaction style of the user 200 and output the value Q of the action at of the robot 100.

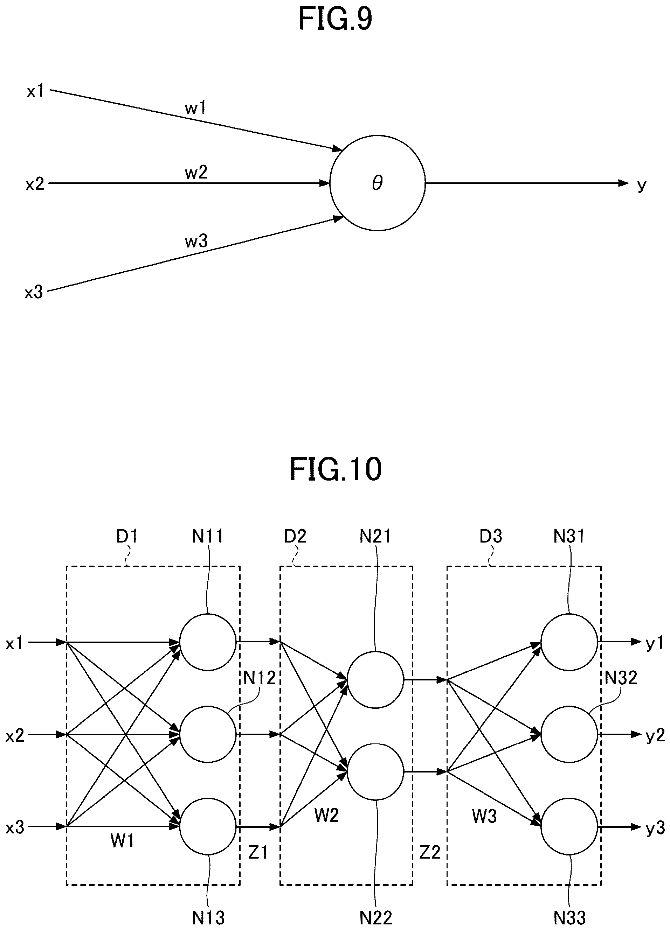

In the following, the deep reinforcement learning will be described, but before that, the neural network will be described. FIG. 9 is a diagram schematically illustrating a learning model of a neuron, and FIG. 10 is a diagram schematically illustrating a learning model of a three-layer neural network configured by combining the neurons illustrated in FIG. 9. The neural network is configured by, for example, an arithmetic device, a memory, and the like that simulate the model of the neuron (a simple perceptron) as illustrated in FIG. 9.

As illustrated in FIG. 9, the neuron outputs an output (result) y with respect to multiple inputs x (in FIG. 9, for example, inputs x1 to x3). Each input x (x1, x2, x3) is multiplied by a weight w (w1, w2, w3) corresponding to the input x. With this, the neuron outputs the output y expressed by the following Equation 2. Here, the input x, the output y, and the weight w are all vectors. Additionally, in the following Equation 2, $\theta$ is a bias, and fk is an activation function.

[Equation 2]

$$y = f_k \left( \sum_{i=1}^{n} x_i w_i - \theta \right) \quad \cdots \text{Equation 2}$$

FIG. 10 illustrates the three-layer neural network configured by combining the neurons illustrated in FIG. 9. As illustrated in FIG. 10, multiple inputs x (here, for example, the inputs x1 to x3) are input from the left side of the neural network, and the results y (here, for example, the outputs y1 to y3) are output from the right side. Specifically, the inputs x1, x2, and x3 are input into each of three neurons N11 to N13, with corresponding weights being multiplied thereto. The weights multiplied to these inputs are collectively referred to as W1.

The neurons N11 to N13 output z11 to z13, respectively. In FIG. 10, these z11 to z13 are collectively referred to as a feature vector Z1, and can be regarded as a vector obtained by extracting the feature of the input vector. The feature vector Z1 is a feature vector between the weight W1 and the weight W2. z11 to z13 are input into each of the two neurons N21 and N22, with corresponding weights being multiplied thereto. The weights multiplied to the feature vector are collectively referred to as W2.

The neurons N21 and N22 output z21 and z22, respectively. In FIG. 10, these z21 and z22 are collectively referred to as a feature vector Z2. The feature vector Z2 is a feature vector between the weight W2 and the weight W3. z21 and z22 are input into each of the three neurons N31 to N33, with corresponding weights being multiplied thereto. The weights multiplied to the feature vector are collectively referred to as W3.

Finally, the neurons N31 to N33 respectively output outputs y1 to y3. The operation of the neural network includes a learning mode in which the weights W1 to W3 of the neural network are trained and an estimation mode in which the outputs y1 to y3 are estimated from the inputs x1 to x3. For example, in the learning mode, the weights W1 to W3 are trained using a training dataset, and in the estimation mode, the action at of the robot 100 is determined using the parameters. Here, although the term "estimation" is used for convenience, it is needless to say that various tasks, such as detection and classification, can be performed.

Additionally, the weights W1 to W3 can be trained by backpropagation. The error information enters from the right side of the neural network and flows to the left side. The backpropagation is a method of adjusting (training), for each neuron, respective weights so as to reduce a difference (error) between an output y when an input x is input and a true output y (labeled data).

Such a neural network can also perform deep learning by further increasing the number of layers to three or more. Additionally, an arithmetic device including a convolutional neural network (CNN) that extracts features of an input in stages and a neural network that classifies or performs regression on an output can be automatically obtained from training data alone.

In the action value table TB3 described above, when the number of the states sn of the interaction styles of the user 200 and the number of actions an of the robot 100 become enormous, the memory space of the action value table TB3 may become too large. Therefore, by approximating the action value table TB3 by a function using a neural network (DQN), an increase in the memory space can be prevented.

The configuration of the estimation unit 111 that performs deep reinforcement learning will be described with reference to FIG. 8 again. The learning unit 124 includes two neural networks (DQN) including a target network TN (value $Q(st, at) |\theta^-$) and a Q network QN (value $Q(st, at) |\theta$). The two networks are stored in the storage unit 126. The two networks have the same structure, but have different parameters $\theta$ (corresponding to the weights described above). The input of each of the two networks is the state st of the interaction style of the user 200, and the output is the value $Q(st, at)$ of the action at of the robot 100.

The state observation unit 121 observes the state st of the interaction style of the user 200 and outputs the state st to the action determination unit 122 and the learning unit 124. The action determination unit 122 determines the action at of the robot 100 by the $\varepsilon$-greedy method or the like, based on the value $Q(st, at |\theta^-)$ of the action at output from the target network TN by inputting the state st of the interaction style of the user 200 into the target network TN. The communication control unit 125 transmits a command to perform the determined action at to the robot 100, and the robot 100 performs the action at in response to the command to perform the action at.

The result acquisition unit 123 acquires a result of the quality of the response of the user 200 (for example, the emotional level of the user 200) as a result of the action at of the robot 100, and outputs the result to the learning unit 124. The learning unit 124 acquires the reward r based on the result of the quality of the response of the user 200. Additionally, the state observation unit 121 observes the next state st+1 of the interaction style of the user 200 and outputs it to the action determination unit 122 and the learning unit 124.

The learning unit 124 stores an experience et (<st, at, st+1, r>) of the robot 100 in the storage unit 126 as an experience buffer. Here, st is the state of the interaction style of the user *200, at* is the action of the robot 100, *st+1* is the next state of the interaction style of the user 200, and *r* is the reward. Here, the learning unit 124 preferably clips the reward r in a range of -1 to +1 so as not to excessively react to an outlier or the like (i.e., reward clipping).

The learning unit 124 periodically acquires an appropriate experience et from the storage unit 103 (the experience buffer) and causes the Q network QN to be trained. For example, the learning unit 124 acquires experiences (B = e0 to en) for mini-batch learning B from the storage unit 126. Then, the learning unit 124 updates the parameters $\theta$ of the Q network QN so as to minimize error $L(\theta)$ of a temporal difference (TD) indicated in the following Equation 3 (i.e., experience replay)

[Equation 3]

$$L(\theta) = \frac{1}{|B|}\sum_{e \in B}(r + \gamma \max Q(st+1, at+1|\theta^-) - Q(st, at|\theta))^2 \qquad \cdots \text{Equation 3}$$

Next, the learning unit 124 reflects the parameters $\theta$ of the Q network QN in the target network TN at a suitable interval. The learning unit 124 may periodically copy all the parameters $\theta$ of the Q network QN to the target network TN, or may reflect the parameters $\theta$ of the Q network QN little by little every time the parameters $\theta$ of the Q network QN are updated.

The action determination unit 122 inputs the next state st+1 of the interaction style of the user 200 into the target network TN. Then, the action determination unit 122 determines the action at+1 of the robot 100 by the $\varepsilon$-greedy method or the like based on the value $Q(st+1, at+1|\theta^-)$ of the action at+1 output from the target network TN. The communication control unit 125 transmits, to the robot 100, a command to perform the determined action at+1, and the robot 100 performs the action at+1 in response to the command to perform the action at+1.

As described above, the estimation unit 111 can estimate the action at of the robot 100 suitable for the state st of the interaction style of the user 200 by performing deep reinforcement learning.

<Processing Example by Controller 13>

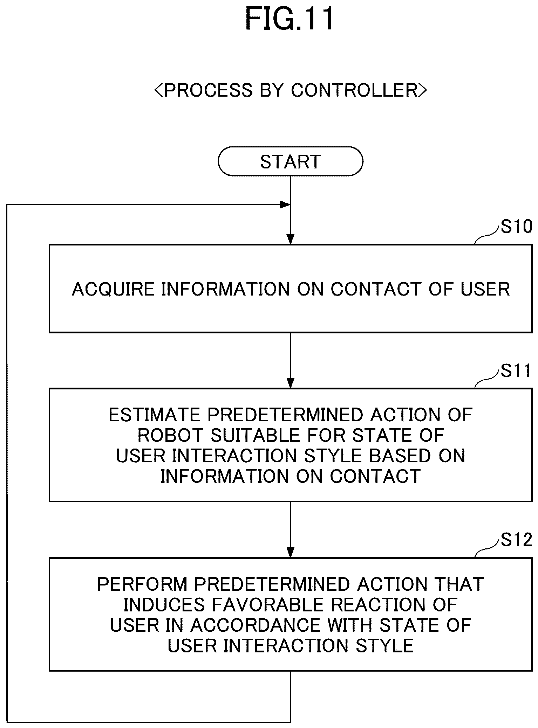

FIG. 11 is a flowchart illustrating a process of the controller 13. FIG. 11 illustrates the process of instructing to perform the action at that induces a favorable response of the user 200 in accordance with the state of the interaction style st of the user 200 by the controller 13.

First, in step S10, the controller 13 acquires the information on the contact of the user 200 with respect to the robot 100 by the acquisition unit 101. The information on the contact of the user 200 is, for example, at least one of the tactile signal S, the first capacitance signal C1, or the second capacitance signal C2.

Here, in step S10, power is supplied to the tactile sensor 12, the first capacitive sensor 21, and the second capacitive sensor 31 from the battery 15. However, in order to reduce the power consumption of the battery 15, the power is not required to be supplied to the camera 11, the vital sensor 14, the servo motor 35, the display 24, the speaker 25, and the light 26.

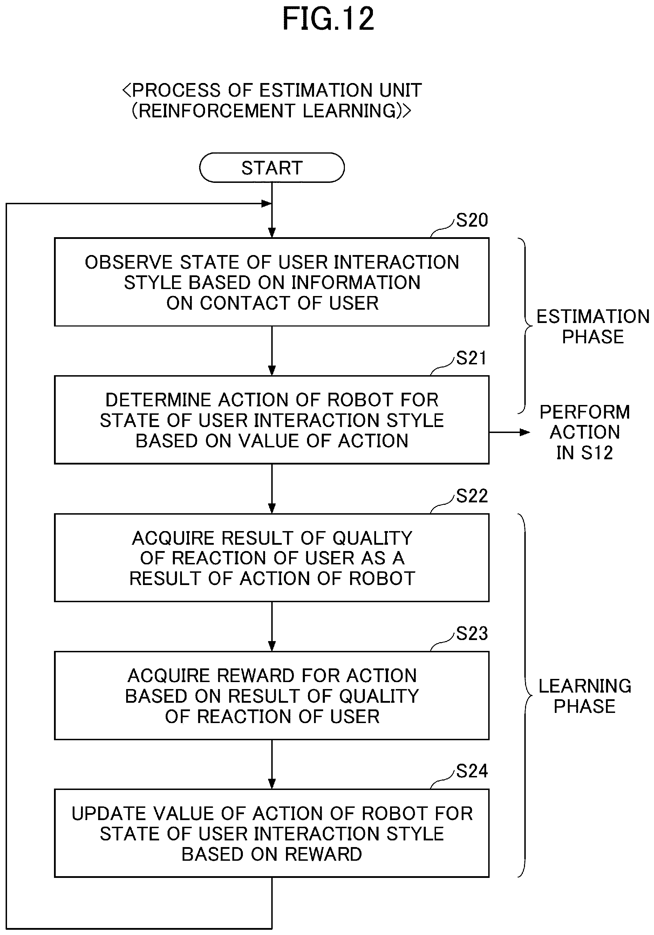

Next, in step S11, the controller 13 estimates the predetermined action at of the robot 100 suitable for the state st of the interaction style of the user 200 based on the information on the contact of the user 200 by the estimation unit 111. The controller 13 preferably estimates the predetermined action at of the robot 100 suitable for the state st of the interaction style of the user 200 while performing reinforcement learning or using a trained learning model, by the estimation unit 111. Here, the processing in step S11 is not essential processing of the controller 13, and can be performed in an external device (a learning device described later) communicably connected to the robot 100. The detailed processing in step S11 will be described later with reference to FIG. 12.

Then, in step S12, the controller 13 instructs to perform the action at that induces a favorable response of the user 200 in accordance with the state st of the interaction style of the user 200 by the action control unit 112. After the robot 100 performs the action at, the controller 13 repeats the processing of steps S10 to S12, and thus the actions at that are natural to the user 200 can be accumulated. The accumulation of the natural actions at leads to an impression of a good partner, and communication becomes natural. As a result, the user 200 will accept the robot 100 for a long-term interaction, and comfort can be provided to the user 200.

As described above, the controller 13 performs a process of performing the action at that induces a favorable response of the user 200 in accordance with the state st of the interaction style of the user 200. Here, in order to improve the learning processing capability or to suppress the power consumption of the battery 15, when the learning device 300 communicably connected to the robot 100 is in charge of the function of the estimation unit 111, the processing of step S11 is performed by the learning device 300.

Additionally, at the start of the process illustrated in FIG. 11, the servo motor 35, the display 24, the speaker 25, and the light 26 may be in a standby state (a sleep state) in which the supply power amount is reduced. That is, the controller 13 preferably reduces the power consumption of the battery 15 by returning various devices from the standby state in which the supply power is reduced as necessary.

<Process by Estimation Unit 111>

FIG. 12 illustrates a process of the estimation unit 111 (for example, the learning device 300). FIG. 12 illustrates a process in which the estimation unit 111 performs reinforcement learning to estimate the predetermined action at of the robot 100 suitable for the state st of the interaction style of the user 200. Steps illustrated in FIG. 12 are detailed processing of step S11 illustrated in FIG. 11.

First, in step S20, the estimation unit 111 observes the state st of the interaction style of the user 200 based on the information on the contact of the user 200 with respect to the robot 100 by the state observation unit 121. The estimation unit 111 preferably observes the state st of the interaction style of the user 200 based on at least one of a contact part, a contact range, a contact time, or a contact force the user 200.

Next, in step S21, the estimation unit 111 determines the action at of the robot 100 suitable for the state st of the interaction style of the user 200 based on the value Q of the action at-1 (the action value table TB3 or the learning model LM, such as DQN described above) by the action determination unit 122. The estimation unit 111 outputs a command to perform the action at to the action control unit 112 or transmits the command to the robot 100 via the communication control unit 125, and thus the robot 100 performs the action at (step S12).

Here, step S20 and step S21 are an estimation phase in which the action at of the robot 100 suitable for the state st of the interaction style of the user 200 is estimated, and the other steps are a learning phase.

In step S22, the estimation unit 111 acquires, as a result of the action at of the robot 100, the information on the result of the quality of the response of the user 200 (e.g., the emotional level of the user 200) by the result acquisition unit 123.

In step S23, the estimation unit 111 acquires the reward r for the action at of the robot 100 based on the result of the quality of the response of the user 200 by the reward acquisition unit 155.

In step S24, the estimation unit 111 updates the value Q of the action at of the robot 100 for the state st of the interaction style of the user 200 based on the reward r by the value update unit 156.

After learning, the process returns to step S20, and the estimation unit 111 observes the next state st+1 of the interaction style of the user 200 by the state observation unit 121. Then, in step S21, the estimation unit 111 determines the action at+1 of the robot 100 suitable for the next state st+1 of the interaction style of the user 200 based on the updated value Q of the action at by the action determination unit 122. Then, the robot 100 performs the next action at+1 (step S12).

Here, after step S24, the estimation unit 111 may provide a step of determining whether the value Q of the action at has converged (that is, whether the learning has converged) by the value update unit 156. When determining that the learning has converged, the estimation unit 111 does not need to perform the learning phase in the subsequent processing. That is, the estimation unit 111 performs only the estimation phase, and estimates the action at+n of the robot 100 suitable for the state st+n of the interaction style of the user 200, using the trained learning model LM (the action value table TB3, DQN, or the like) (t+n is a timing after n times).

<Configuration of Estimation Unit 111 of Modification Example>

FIG. 13 is a block diagram illustrating a functional configuration of the estimation unit 111 according to a modification example. The estimation unit 111 of the modification example is different from the functional configuration of the estimation unit 111 illustrated in FIG. 8 in that the action at of the robot 100 suitable for the state st of the interaction style of the user 200 is estimated by performing supervised learning. That is, the learning unit 124 includes a training data recording unit 157, an error calculation unit 158, and a learning model update unit 159. In the following, only differences from the configuration of the estimation unit 111 illustrated in FIG. 8 will be described.

The function of the training data recording unit 157 can be realized by a non-volatile memory, such as the HDD/SSD 304. Additionally, the functions of the error calculation unit 158 and the learning model update unit 159 can be realized by a processor, such as the CPU 301, executing processing defined in a program stored in a non-volatile memory, such as the ROM 302, and the like.

The learning unit 124 can use a decision tree (a regression tree), a neural network, logistic regression, or the like as the learning model LM for performing supervised learning. In the following, an example, in which the learning unit 124 generates the learning model LM of the neural network configured to receive the state st of the interaction style of the user 200 and output the value Q of the action at of the robot 100, by supervised learning, will be described.

The training data recording unit 157 stores training data obtained in the past by, for example, another robot 100, simulation, or the like. The training data is data with a result (a label) including a state st-n (t-n is a timing n times before) of the interaction style of the user 200, an action at-n of the robot 100, and a value Q (corresponding to a label) of the action at-n. The estimation unit 111 acquires the training data from another robot 100 or another external device via the communication control unit 125 or the like. Additionally, the estimation unit 111 may store experiences experienced by the robot 100 itself as the training data.

The error calculation unit 158 first acquires the training data from the training data recording unit 157 and calculates the error L of the value Q of the action at based on the training data. For example, when the response of the user 200 is actually favorable, the error calculation unit 158 calculates the error L by assuming that there is an error of -log(Q(st, at)). Additionally, when the response of the user 200 is not actually favorable, the error calculation unit 158 calculates the error L by assuming that there is an error of -log(1-Q(st, at)).

The learning model update unit 159 updates the parameters (the above-described weights and the like) of the learning model LM of the neural network so as to minimize the error L. The above-described error back propagation method (back propagation) can be used to update the learning model LM. With this, the learning unit 124 generates the learning model LM that has been trained to a certain level using the training data.

Thereafter, the estimation unit 111 estimates the action at suitable for the actual state st of the interaction style of the user 200, using the learning model LM generated by supervised learning. Then, the robot 100 performs the action at that induces a favorable response of the user 200 in accordance with the state st of the interaction style of the user 200.

More specifically, the state observation unit 121 observes the state st of the interaction style of the user 200, and the action determination unit 122 determines the predetermined action at suitable for the state st of the interaction style of the user 200, using the learning model LM. Then, the communication control unit 125 transmits a command to perform the action at to the robot 100, and the robot 100 performs the received command to perform the action at.

The result acquisition unit 123 acquires a result of the quality of the response of the user 200 as a result of the action at of the robot 100. The error calculation unit 158 calculates the error of the value Q of the action at based on the result of the quality of the response of the user 200, and the learning model update unit 159 further updates the learning model LM of the neural network so as to minimize the error L. Then, the action determination unit 122 determines the action at+1 of the robot 100 suitable for the next state st+1 of the interaction style of the user 200, using the learning model LM.

As described above, the estimation unit 111 estimates the action at of the robot 100 suitable for the state st of the interaction style of the user 200, using the learning model LM trained to a certain level by supervised learning. With this, for example, even when the robot 100 breaks down and is replaced with the robot 100 of the same model number, the robot 100 after the replacement can learn the past experiences based on the training data of the robot 100 that has broken down and can immediately perform the action at suitable for the state st of the interaction style of the user 200. Additionally, for the user 200 with no prior interaction, the robot 100 can perform the action at suitable for the state st of the interaction style of the user 200 to some extent.

<Process by Estimation Unit 111 of Modification Example>

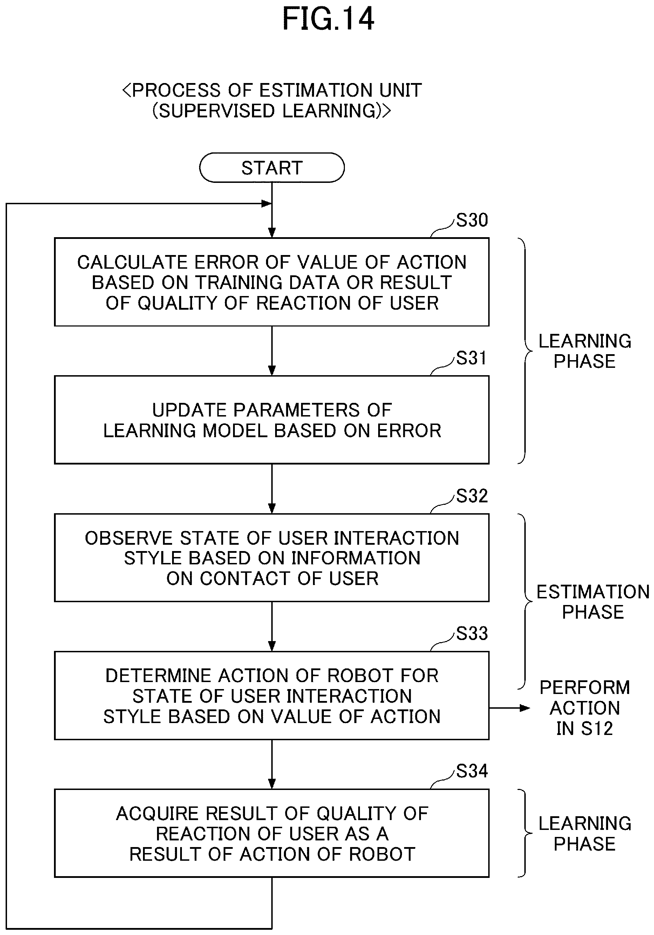

FIG. 14 is a flowchart illustrating a process of the estimation unit 111 (the learning device 300) of the modification example. FIG. 14 illustrates the process in which the estimation unit 111 performs supervised learning to estimate the action at of the robot 100 suitable for the state st of the interaction style of the user 200. Steps illustrated in FIG. 14 are detailed processing of step S11 illustrated in FIG. 11.

First, in step S30, the estimation unit 111 acquires the training data from the training data recording unit 157 and calculates the error L of the value Q of the action at of the robot 100 based on the training data by the error calculation unit 158.

Next, in step S31, the estimation unit 111 updates the parameters (the weights and the like described above) of the learning model LM of the neural network so as to minimize the error L by the learning model update unit 159. With this, the estimation unit 111 can estimate the action at suitable for the actual state st of the interaction style of the user 200, using the learning model LM trained to a certain level by the training data.

Thereafter, in step S32, the estimation unit 111 observes the actual state st of the interaction style of the user 200 based on the information on the contact of the user 200 with respect to the robot 100 by the state observation unit 121. The estimation unit 111 preferably estimates the interaction style of the user 200 and observes the state st of the interaction style based on at least one of a contact part, a contact range, a contact time, or a contact force the user 200.

Next, in step S33, the estimation unit 111 determines the action at of the robot 100 suitable for the state st of the interaction style of the user 200 based on the value Q (the learning model LM, such as a neural network) of the action at-1 by the action determination unit 122. The estimation unit 111 outputs a command to perform the action at to the action control unit 112 or transmits the command to the robot 100 via the communication control unit 125. With this, the robot 100 performs the action at corresponding to the state st of the interaction style of the user 200 (step S12).

Here, steps S32 and S33 are the estimation phase for estimating the action at of the robot 100 suitable for the state of the interaction style of the user 200, and the other steps are the learning phase.

In step S34, the estimation unit 111 acquires the information (the emotional level of the user 200) on the result of the quality of the response of the user 200 as a result of the action at of the robot 100 by the result acquisition unit 123.

Next, the process returns to step S30, and the estimation unit 111 calculates the error L of the value Q of the action at based on the result of the quality of the response of the user 200 by the error calculation unit 158.

Then, in step S31, the estimation unit 111 updates the parameters (the weights and the like) of the learning model LM based on the error L by the learning model update unit 159.

After learning, in step S32, the estimation unit 111 observes the next state st+1 of the interaction style of the user 200 by the state observation unit 121. Then, in step S33, the estimation unit 111 determines the action at+1 of the robot 100 suitable for the next state st+1 of the interaction style of the user 200 based on the updated value Q of the action at by the action determination unit 122. Then, the robot 100 performs the next action at+1 (step S12).

Here, after step S31, the estimation unit 111 may provide a step of determining whether the value Q of the action at has converged (that is, whether the learning has converged) by the learning model update unit 159. When determining that the learning has converged, the estimation unit 111 does not need to perform the learning phase in the subsequent processing. That is, the estimation unit 111 performs only the estimation phase, and estimates the action at+n of the robot 100 suitable for the state st+n (t+n is a timing after n times) of the interaction style of the user 200, using the trained learning model LM (the neural network or the like).

<Operation and Effect of Present Embodiment>

As described above, the robot 100 performs the action at that induces a favorable response of the user 200, in accordance with the state st of the interaction style of the user 200 based on the information on the contact of the user 200 with respect to the robot 100. Therefore, the actions at that do not match the interaction style of the user 200 can be reduced. The accumulation of natural behaviors leads to an impression of a good partner, and communication becomes natural. As a result, the user 200 will accept the robot 100 for a long-term interaction, and comfort can be provided to the user 200.

Additionally, the information on the contact of the user 200 includes the information on at least one of the contact part, the contact range, the contact time, or the contact force of the robot 100. Even when hugging the robot 100, the user 200 is not necessarily in a state where the user 200 can interact with the robot gently and may be busy. Additionally, the user 200 may want to hug the robot 100 strongly. Therefore, by adding not only the information on the contact part and the contact range but also the information on the contact time and contact force, the state st of the interaction style of the user 200 can be observed with high accuracy.

Here, the sensor used to detect the information on the contact of the user 200 is preferably a sensor that does not disturb the tactile feeling of the user 200, that is, a sensor having a good touch feeling, such as the tactile sensor 12, the first capacitive sensor 21, and the second capacitive sensor 31. For example, it is preferable that the configuration has flexibility to follow a contact change of the exterior member 10 of the robot 100. With this, the user 200 will want to interact with the robot 100, and the frequency or the number of times the user 200 interacts with the robot 100 can be increased.

Additionally, the state st of the interaction style of the user 200 is a predetermined state sn classified based on a combination of the interaction style estimated based on the information on the contact of the user 200 and at least one of the contact time or the contact force of the interaction style. For example, the state st of the interaction style is a predetermined state sn of at least one of "hug", "tap", "rub", "pat", "push", "hold a hand", "rub a face", "stroke", "give a paw", or the like. With this, the state st of the interaction style of the user 200 is classified into several tens of types to several hundreds of types, and thus an increase in the memory space of the action value table TB3 can be suppressed.

Furthermore, the predetermined action an of the robot 100 is an action that imitates the interaction style of the user 200. Additionally, the predetermined action an is an action that imitates at least one of the duration of the interaction by the user 200, the contact change rate of the user 200, or the contact force of the user 200. That is, the robot 100 performs the action that imitates the state st of the interaction style of the user 200, thereby increasing the possibility of inducing a favorable response of the user 200.

Additionally, the robot 100 generates the learning model LM configured to receive the state st of the interaction style of the user 200 and output the value Q of the action at of the robot 100, by machine learning (reinforcement learning, supervised learning, or the like). Therefore, the robot 100 can learn the action at suitable for the interaction style of the user 200, and can reduce unnatural feelings in communication. As a result, continuous interaction with the user 200 can be realized and comfort can be provided to the user 200.

Further, the robot 100 includes the result acquisition unit 123 that acquires information on the result of the quality of the response of the user 200, and the learning unit 124 updates the learning model LM based on the result of the quality of the response of the user 200. Therefore, the robot 100 can continuously learn the action at suitable for the state st of the interaction style of the user 200 and continuously perform the action suitable for the interaction style of the user 200, and can reduce unnatural feelings in communication. Additionally, the learning model LM can increase the reliability of the learning capability of the robot 100 by using the action value table TB3 or the neural network (DQN), the effect of which has been already demonstrated.

Additionally, the information on the result of the quality of the response of the user 200 includes the emotional level of the user 200 estimated from the face image and the biological information of the user 200. Then, the learning unit 124 acquires the reward r for the action at of the robot 100 based on the result of the quality of the response (the emotional level) of the user 200 and updates the value Q of the action at for the state st of the interaction style of the user 200 based on the reward r. Therefore, the robot 100 can learn the action at suitable for the state st of the interaction style of the user 200 in accordance with the emotional level of the user 200.

Additionally, the robot 100 may estimate the action at of the robot 100 suitable for the state st of the interaction style of the user 200, using the learning model LM trained to a certain level by supervised learning. With this, for example, even when the robot 100 breaks down and is replaced with the robot 100 of the same model number, the robot 100 after the replacement can learn the past experiences based on the training data and immediately perform the action at suitable for the state st of the interaction style of the user 200. Additionally, the robot 100 can perform the action at suitable for the state st of the interaction style of the user 200 to some extent for the user 200 with no prior interaction.

The above-described function of the estimation unit 111 of the robot 100 may be provided in the learning device 300 communicably connected to the robot 100 and may be distributed and processed. This can improve the learning processing capability of the computer. Additionally, the distributed processing by the learning device 300 can provide technical effects, such as a reduction in power consumption, a reduction in the number of times of charging, and a reduction in battery weight of the battery 15 of the robot 100.

Although the preferred embodiments have been described in detail above, the present invention is not limited to the above-described embodiments, and various modifications and substitutions can be made to the above-described embodiments without departing from the scope of the appended claims.

Additionally, the numerals, such as ordinal numbers and quantities used in the description of the above-described embodiments are all examples for specifically describing the technique of the present invention, and the present invention is not limited to the numerals described as examples. Additionally, the connection relationship between the constituent elements is an example for specifically describing the technique of the present invention, and the connection relationship for realizing the functions of the present invention is not limited thereto.

The robot according to the present embodiment is particularly suitable for use in promoting oxytocin secretion and providing comfort (sense of security or self-affirmation) to a working adult living alone, a senior person whose child has moved out, a frail elderly person who is a target of home healthcare, or the like. However, the present invention is not limited to this use, and can be used to provide comfort to various users.

Aspects of the present disclosure are as follows, for example.

<1> A robot including:

an acquisition unit configured to acquire information on contact of a user with respect to the robot; and
an action control unit configured to instruct to perform a predetermined action that induces a favorable response of the user in accordance with a state of an interaction style of the user, based on the information on the contact.

<2> The robot as described in <1>, further comprising an estimation unit configured to estimate the predetermined action suitable for the state of the interaction style of the user based on the information on the contact,
wherein the estimation unit includes:

a state observation unit configured to observe the state of the interaction style of the user based on the information on the contact; and
an action determination unit configured to determine the predetermined action suitable for the state of the interaction style based on a value of the action.

<3> The robot as described in <1> or <2>, wherein the information on the contact includes information on at least one of a contact part, a contact range, a contact time, or a contact force.

<4> The robot as described in <1> to <3>, further comprising a sensor configured to detect the information on the contact,
wherein the sensor is configured not to disturb a tactile feeling of the user.

<5> The robot as described in <1> to <4>, wherein the state of the interaction style is a predetermined state classified by a combination of the interaction style estimated based on the information on the contact and information on at least one of a contact time or a contact force of the interaction style.

<6> The robot as described in <1> to <5>, wherein the predetermined action is an action that imitates the interaction style of the user.

<7> The robot as described in <1> to <6>, wherein the predetermined action is an action that imitates at least one of a duration of the interaction by the user, a contact change rate of the user, or a contact force of the user.

<8> The robot as described in <2>, wherein the estimation unit includes a learning unit configured to generate, by machine learning, a learning model configured to receive the state of the interaction style of the user and output the value of the action of the robot.

<9> The robot as described in <8>,

wherein the estimation unit further includes a result acquisition unit configured to acquire information on a result of quality of a reaction of the user as a result of the action of the robot, and
wherein the learning unit updates the learning model based on the result of the quality of the response.

<10> The robot as described in <8> or <9>, wherein the learning model is an action value table or a neural network.

<11> The robot as described in <9>,

wherein the acquisition unit further acquires a face image of a user and biological information of the user,
wherein the information on the result of the quality of the reaction includes an emotional level of the user estimated from the face image and the biological information, and
wherein the learning unit acquires a reward for the action of the robot based on the result of the quality of the reaction, and updates the value of the action for the state of the interaction style of the user based on the reward.

<12> A learning device communicatively connected to a robot, the learning device comprising:

a state observation unit configured to observe, based on information on contact of a user with respect to the robot, a state of an interaction style of the user; and
a learning unit configured to generate, by machine learning, a learning model configured to receive the state of the interaction style of the user and output a value of an action of the robot.

<13> The learning device as described in <12>, including:

an action determination unit configured to determine the action of the robot suitable for the state of the interaction style based on the value of the action; and
a communication control unit configured to transmit, to the robot, a command to perform the action.

<14> A control method of a robot, the control method comprising:

a step of acquiring, by the robot, information on contact of a user with respect to the robot; and
a step of performing, by the robot, a predetermined action that induces a favorable response of the user in accordance with a state of an interaction style of the user, based on the information on the contact.

<15> A program for causing a computer controlling a robot to perform:

a step of acquiring information on contact of a user with respect to the robot; and
a step of instructing to perform a predetermined action that induces a favorable response of the user in accordance with a state of an interaction style of the user, based on the information on the contact.

This application is based on and claims priority to Japanese Patent Application No. 2022-156765 filed in the Japan Patent Office on September 29, 2022, the entire contents of which are incorporated herein by reference.

Description of reference symbols

1 trunk
2 head
2a right eye
2b left eye
2c mouth
2d right cheek
2e left cheek
3 arm
3a right arm
3b left arm
4 leg
4a right leg
4b left leg
10 exterior member
11 camera
12 tactile sensor
13 controller
14 vital sensor (electromagnetic wave sensor)
141 microwave transmitter
142 microwave receiver
15 battery
16 trunk frame
17 trunk mounting base
21 first capacitive sensor
22 head frame
23 head mounting base
24 display
24a right-eye display
24b left-eye display
25 speaker
26 light
26a right-cheek light
26b left-cheek light
27 head connection mechanism
31 second capacitive sensor
32a right arm frame

32b left arm frame
33 right arm mounting base
34a right arm connection mechanism
34b left arm connection mechanism
35 servo motor
35a right arm servo motor
35b left arm servo motor
35c head servo motor
35d right leg servo motor
35e left leg servo motor
41a right leg wheel
41b left leg wheel
42a right leg frame
42b left leg frame
44a right leg connection mechanism
44b left leg connection mechanism
100 robot
101 acquisition unit
102 communication control unit
103 storage unit
104 authentication unit
105 registration unit
106 start control unit
107 motor control unit
108 output unit
109 registered information
110 detection unit
111 estimation unit
112 action control unit
121 state observation unit
122 action determination unit
123 result acquisition unit
124 learning unit
125 communication control unit
126 storage unit
131 CPU
132 ROM
133 RAM
134 HDD/SSD
135 device connection I/F
136 communication I/F
151 interaction style estimation unit
152 emotional level estimation unit
155 reward acquisition unit
156 value update unit
157 training data recording unit
158 error calculation unit
159 learning model update unit
200 user
300 learning device
301 CPU
302 ROM
303 RAM
304 HDD/SSD
305 device connection I/F
306 communication I/F
A, A' system bus
B biological information

C1 first capacitance signal
C2 second capacitance signal
F1a right shoulder frame
F2a right upper arm frame
F3a right elbow frame
F4a right forearm frame
F1b left shoulder frame
F2b left upper arm frame
F3b left elbow frame
F4b left forearm frame
F1c neck frame
F2c face frame
Im captured image
L error
LM learning model
Ms transmitted wave
Mr reflected wave
M1a right shoulder servo motor
M2a right upper arm servo motor
M3a right elbow servo motor
M4a right forearm servo motor
M1b left shoulder servo motor
M2b left upper arm servo motor
M3b left elbow servo motor
M4b left forearm servo motor
M1c neck servo motor
M2c face servo motor
Q value
S tactile signal
s state
a action
r reward

## Claims

1. A robot comprising:

   an acquisition unit configured to acquire information on contact of a user with respect to the robot; and
   an action control unit configured to instruct to perform a predetermined action that induces a favorable response of the user in accordance with a state of an interaction style of the user, based on the information on the contact.

2. The robot as claimed in claim 1, further comprising an estimation unit configured to estimate the predetermined action suitable for the state of the interaction style of the user, wherein the estimation unit includes:

   a state observation unit configured to observe the state of the interaction style of the user based on the information on the contact; and
   an action determination unit configured to determine the predetermined action suitable for the state of the interaction style based on a value of the action.

3. The robot as claimed in claim 1 or **2,** wherein the information on the contact includes information on at least one of a contact part, a contact range, a contact time, or a contact force.

4. The robot as claimed in claim 1 or **2,** further comprising a sensor configured to detect the information on the contact, wherein the sensor is configured not to disturb a tactile feeling of the user.

5. The robot as claimed in claim 1 or 2, wherein the state of the interaction style is a predetermined state classified by a combination of the interaction style estimated based on the information on the contact and information on at least one of a contact time or a contact force of the interaction style.

6. The robot as claimed in claim 1 or 2, wherein the predetermined action is an action that imitates the interaction style of the user.

7. The robot as claimed in claim 1 or 2, wherein the predetermined action is an action that imitates at least one of a duration of the interaction by the user, a contact change rate of the user, or a contact force of the user.

8. The robot as claimed in claim 2, wherein the estimation unit includes a learning unit configured to generate, by machine learning, a learning model configured to receive the state of the interaction style of the user and output the value of the action of the robot.

9. The robot as claimed in claim 8,

   wherein the estimation unit further includes a result acquisition unit configured to acquire information on a result of quality of a reaction of the user as a result of the action of the robot, and
   wherein the learning unit updates the learning model based on the result of the quality of the response.

10. The robot as claimed in claim 8, wherein the learning model is an action value table or a neural network.

11. The robot as claimed in claim 9,

   wherein the acquisition unit further acquires a face image of a user and biological information of the user,
   wherein the information on the result of the quality of the reaction includes an emotional level of the user estimated from the face image and the biological information, and
   wherein the learning unit acquires a reward for the action of the robot based on the result of the quality of the reaction, and updates the value of the action for the state of the interaction style of the user based on the reward.

12. A learning device communicatively connected to a robot, the learning device comprising:

   a state observation unit configured to observe, based on information on contact of a user with respect to the robot, a state of an interaction style of the user; and
   a learning unit configured to generate, by machine learning, a learning model configured to receive the state of the interaction style of the user and output a value of an action of the robot.

13. The learning device as claimed in claim 12, comprising:

   an action determination unit configured to determine the action of the robot suitable for the state of the interaction style based on the value of the action; and
   a communication control unit configured to transmit, to the robot, a command to perform the action.

14. A control method of a robot, the control method comprising:

   a step of acquiring, by the robot, information on contact of a user with respect to the robot; and
   a step of performing, by the robot, a predetermined action that induces a favorable response of the user in accordance with a state of an interaction style of the user, based on the information on the contact.

15. A program for causing a computer controlling a robot to perform:

   a step of acquiring information on contact of a user with respect to the robot; and
   a step of instructing to perform a predetermined action that induces a favorable response of the user in accordance with a state of an interaction style of the user, based on the information on the contact.

# FIG.1

# FIG.2

# FIG.3

# FIG.4

**FIG.5**

ROBOT 100

CONTROLLER 13

CAMERA 11

TACTILE SENSOR 12

VITAL SENSOR 14

FIRST CAPACITIVE SENSOR 21

SECOND CAPACITIVE SENSOR 31

CPU 131

ROM 132

RAM 133

HDD/SSD 134

DEVICE CONNECTION I/F 135

COMMUNICATION I/F 136

A

SERVO MOTOR 35

BATTERY 15

DISPLAY 24

SPEAKER 25

LIGHT 26

EP 4 596 075 A1

FIG.6

ROBOT — 100

| CAMERA — 11 | Im |
| TACTILE SENSOR — 12 | S |
| VITAL SENSOR — 14 | B |
| FIRST CAPACITIVE SENSOR — 21 | C1 |
| SECOND CAPACITIVE SENSOR — 31 | C2 |

CONTROLLER — 13

ACQUISITION UNIT — 101

COMMUNICATION CONTROL UNIT — 102

STORAGE UNIT — 103

AUTHENTICATION UNIT — 104

Im

REGISTRATION UNIT — 105

REGISTERED INFORMATION — 109

START CONTROL UNIT — 106

MOTOR CONTROL UNIT — 107

OUTPUT UNIT — 108

DETECTION UNIT — 110

ESTIMATION UNIT — 111

ACTION CONTROL UNIT — 112

BATTERY — 15

SERVO MOTOR — 35

DISPLAY — 24

SPEAKER — 25

LIGHT — 26

EP 4 596 075 A1

# FIG.7

300

LEARNING DEVICE

111

ESTIMATION UNIT

301
CPU

304
HDD/SSD

302
ROM

305
DEVICE
CONNECTION I/F

303
RAM

306
COMMUNICATION
I/F

A'

FIG.8

LEARNING DEVICE

300

ESTIMATION UNIT

111

ENVIRONMENT

USER
200

S

Im

B

ROBOT
100

ACTION a

STATE
OBSERVATION UNIT

INTERACTION
STYLE ESTIMATION
UNIT

121    151

RESULT
ACQUISITION UNIT

EMOTIONAL LEVEL
ESTIMATION UNIT

123    152

STATE s

LEARNING UNIT
124

REWARD
ACQUISITION UNIT
155

REWARD r

VALUE
UPDATE UNIT
156

VALUE Q

STORAGE UNIT
126

COMMUNICATION
CONTROL UNIT
125

ACTION DETER-
MINATION UNIT
122

EP 4 596 075 A1

# FIG.9

# FIG.10

# FIG.11

<PROCESS BY CONTROLLER>

START

S10

ACQUIRE INFORMATION ON CONTACT OF USER

S11

ESTIMATE PREDETERMINED ACTION OF
ROBOT SUITABLE FOR STATE OF
USER INTERACTION STYLE BASED ON
INFORMATION ON CONTACT

S12

PERFORM PREDETERMINED ACTION THAT
INDUCES FAVORABLE REACTION OF
USER IN ACCORDANCE WITH STATE OF
USER INTERACTION STYLE

# FIG.12

<PROCESS OF ESTIMATION UNIT
(REINFORCEMENT LEARNING)>

START

S20

OBSERVE STATE OF USER INTERACTION
STYLE BASED ON INFORMATION
ON CONTACT OF USER

ESTIMATION
PHASE

S21

DETERMINE ACTION OF ROBOT FOR
STATE OF USER INTERACTION STYLE
BASED ON VALUE OF ACTION

PERFORM
ACTION
IN S12

S22

ACQUIRE RESULT OF QUALITY
OF REACTION OF USER AS A
RESULT OF ACTION OF ROBOT

S23

ACQUIRE REWARD FOR ACTION
BASED ON RESULT OF QUALITY
OF REACTION OF USER

LEARNING
PHASE

S24

UPDATE VALUE OF ACTION OF ROBOT FOR
STATE OF USER INTERACTION STYLE
BASED ON REWARD

**FIG.13**

ENVIRONMENT

USER ~200

S

Im

B

ROBOT ~100

ACTION a

300~

111~

LEARNING DEVICE

ESTIMATION UNIT

STATE
OBSERVATION UNIT

INTERACTION
STYLE ESTIMATION
UNIT

121    151

RESULT
ACQUISITION UNIT

EMOTIONAL LEVEL
ESTIMATION UNIT

123    152

STATE s

ERROR L

LEARNING UNIT ~124

TRAINING DATA
RECORDING UNIT

157

158

ERROR
CALCULATION UNIT

159

LEARNING MODEL
UPDATE UNIT

126

STORAGE UNIT

122

ACTION DETER-
MINATION UNIT

125

COMMUNICATION
CONTROL UNIT

EP 4 596 075 A1

# FIG.14

<PROCESS OF ESTIMATION UNIT
(SUPERVISED LEARNING)>

START

**S30**
CALCULATE ERROR OF VALUE OF ACTION
BASED ON TRAINING DATA OR RESULT
OF QUALITY OF REACTION OF USER

**S31**
UPDATE PARAMETERS OF
LEARNING MODEL BASED ON ERROR

LEARNING PHASE

**S32**
OBSERVE STATE OF USER INTERACTION
STYLE BASED ON INFORMATION
ON CONTACT OF USER

ESTIMATION PHASE

**S33**
DETERMINE ACTION OF ROBOT FOR
STATE OF USER INTERACTION
STYLE BASED ON VALUE OF ACTION

PERFORM ACTION IN S12

**S34**
ACQUIRE RESULT OF QUALITY OF
REACTION OF USER AS A
RESULT OF ACTION OF ROBOT

LEARNING PHASE

## INTERNATIONAL SEARCH REPORT

International application No.

**PCT/JP2023/035074**

| A. | CLASSIFICATION OF SUBJECT MATTER |
|---|---|

*A63H 11/00*(2006.01)i; *B25J 13/08*(2006.01)i
FI:    A63H11/00 Z; B25J13/08 Z

According to International Patent Classification (IPC) or to both national classification and IPC

| B. | FIELDS SEARCHED |
|---|---|

Minimum documentation searched (classification system followed by classification symbols)

A63H11/00; B25J13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 10-289006 A (YAMAHA MOTOR CO., LTD.) 27 October 1998 (1998-10-27) paragraphs [0006]-[0019], [0033], fig. 1-8, etc. | 1-5, 8-15 |
| Y | paragraphs [0006]-[0019], [0033], fig. 1-8, etc. | 6, 7 |
| Y | JP 2006-088276 A (ADVANCED TELECOMMUNICATIONS RESEARCH INST. INTERNATIONAL) 06 April 2006 (2006-04-06) paragraphs [0028], [0055]-[0059], [0140], etc. | 6, 7 |
| A | JP 2016-012340 A (SOFTBANK CORP.) 21 January 2016 (2016-01-21) paragraphs [0014]-[0124], etc. | 1-15 |
| A | JP 2019-135078 A (GROOVE X, INC.) 15 August 2019 (2019-08-15) paragraphs [0001]-[0154], etc. | 1-15 |
| A | US 2020/0009739 A1 (LG ELECTRONICS INC.) 09 January 2020 (2020-01-09) paragraphs [0001]-[0309], etc. | 1-15 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/035074**

| Patent document cited in search report | | | Publication date (day/month/year) | Patent family member(s) | | | Publication date (day/month/year) |
|---|---|---|---|---|---|---|---|
| JP | 10-289006 | A | 27 October 1998 | US | 2001/0001318 | A1 | |
| | | | | paragraphs [0027]-[0091], [0121]-[0127], fig. 1-8, etc. | | | |
| | | | | US | 6175772 | B1 | |
| JP | 2006-088276 | A | 06 April 2006 | (Family: none) | | | |
| JP | 2016-012340 | A | 21 January 2016 | (Family: none) | | | |
| JP | 2019-135078 | A | 15 August 2019 | US | 2019/0077021 | A1 | |
| | | | | paragraphs [0001]-[0253], etc. | | | |
| | | | | GB | 2564821 | A | |
| | | | | WO | 2017/199662 | A1 | |
| | | | | DE | 112017002589 | T | |
| | | | | CN | 109070332 | A | |
| US | 2020/0009739 | A1 | 09 January 2020 | KR | 10-2019-0100090 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019072495 A

- JP 2022156765 A